# EUROPEAN PATENT APPLICATION

(11) **EP 4 332 946 A1**
(43) Date of publication of application: **06.03.2024**
(21) Application number: 22795386.6
(22) Date of filing: 23.03.2022
(51) Int. Cl.: G09F 3/02, G09F 3/03, G09F 3/10

(54) **LASER-PRINTED ADHESIVE LAMINATE**

(30) Priority: 28.04.2021 JP 2021076403
(71) Applicant: TOYOBO CO., LTD., Osaka-shi, Osaka 530-0001 (JP)
(72) Inventor: ISHIMARU, Shintaro, Tsuruga-shi, Fukui 914-8550 (JP); HARUTA, Masayuki, Tsuruga-shi, Fukui 914-8550 (JP)
(74) Representative: Müller-Boré & Partner Patentanwälte PartG mbB
(86) International application number: PCT/JP2022/013635
(87) International publication number: WO 2022/230466

(57) **Abstract**

To provide an adhesive laminate suitable for high-mix low-volume production without blurring of printing due to external rubbing or the like, or a security label using the adhesive laminate. An adhesive laminate comprising at least one laser-printed layer capable of being printed by laser irradiation, wherein the laser-printed layer includes a laser-printed portion and a non-printed portion, an absolute value of a difference between the color L* values of the printed portion and the non-printed portion is 1.0 or more and 10.0 or less, and a pressure-sensitive adhesive layer is provided on at least one surface of the adhesive laminate.

## Description

### TECHNICAL FIELD

The present invention relates to an adhesive laminate including a layer printed by laser.

### BACKGROUND ART

In many distributed articles represented by foods, pharmaceuticals, and industrial products, a display is provided to provide information regarding contents such as product names, producing dates, and raw materials. In this display method, the display is often directly provided on a package (container) of an article, or a display body such as a label is often attached to the container. When the display body is attached, the display body may be firmly bonded by heat sealing or an adhesive, or may be attached in a resealable state by a pressure-sensitive adhesive (pressure-sensitive adhesive label). Among these, in the case of using the latter pressure-sensitive adhesive label, the latter adhesive label can be easily pasted at room temperature by a human hand without using a heat sealing machine or the like as in the former, and pasted again after being peeled off depending on the type of the pressure-sensitive adhesive, and therefore the pressure-sensitive adhesive label is widely used as a simple display means. In recent years, for example, as in Patent Document 1, the pressure-sensitive adhesive label has been applied not only as a means for displaying information but also as a label having a security function such as preventing mischief on contents and proving an unopened packaging.

The technical problems of the pressure-sensitive adhesive label, for example, as disclosed in Patent Documents 1 and 2 are adhesion to an object to be attached and printability to the pressure-sensitive adhesive label, and a large amount of effort has been made to solve these problems. Meanwhile, the "printing" as used herein is generally a technique in which ink is applied, and then dried and cured, and a plate whose printing contents are determined in advance is often used. Therefore, high-mix low-volume production makes it necessary to frequently change the plate, and causes a problem that the productivity of the printing is extremely lowered. For example, in a case where it is necessary to produce a pop label as part of a certain product sales promotion campaign, the plate is unnecessary after the campaign is ended. An ink ribbon or the like is used for always changing display contents such as production lots of products, but there is a problem that the ink ribbon is easily peeled off or smeared due to external rubbing or the like.

### PRIOR ART DOCUMENT

### PATENT DOCUMENT

Patent Document 1: JP-A-2018-4723
Patent Document 2: JP-A-2020-94076
Patent Document 3: JP-A-2017-206682

### SUMMARY OF THE INVENTION

### PROBLEMS TO BE SOLVED BY THE INVENTION

It is an object of the present invention to solve the problems of the conventional art such as the foregoing. That is, an object of the present invention is to provide an adhesive laminate suitable for high-mix low-volume production without blurring of printing due to external rubbing or the like, or a security label using the adhesive laminate.

### MEANS FOR SOLVING THE PROBLEMS

The present invention is constituted as follows.
1. An adhesive laminate comprising at least one laser-printed layer capable of being printed by laser irradiation, wherein the laser-printed layer includes a laser-printed portion and a non-printed portion, an absolute value of a difference between the color L* values of the printed portion and the non-printed portion is 1.0 or more and 10.0 or less, and a pressure-sensitive adhesive layer is provided on at least one surface of the adhesive laminate.
2. The adhesive laminate according to claim 1,
   wherein at least one of bismuth, gadolinium, neodymium, titanium, antimony, tin, and aluminum as a simple substance or an oxide is contained as a metal capable of being printed by laser irradiation.
3. The adhesive laminate according to any one of 1. or 2., wherein a thickness of the laser-printed layer is 5 um or more and 200 um or less.
4. The adhesive laminate according to any one of 1. to 3., wherein either a height or a width of a print size in the printed portion is 0.2 mm or more and 100 mm or less.
5. The adhesive laminate according to any one of 1. to 4., wherein a resin constituting the laser-printed layer is mainly any one of polyester, polypropylene, polyethylene, and polystyrene.
6. The adhesive laminate according to any one of 1. to 5., wherein the adhesive laminate has an adhesive strength of 0.2 N/25 mm or more and 20 N/25 mm or less.
7. The adhesive laminate according to any one of 1. to 6., wherein the adhesive laminate includes a release layer provided on a surface opposite to the pressure-sensitive adhesive layer.
8. A security label comprising the adhesive laminate according to any one of 1. to 7. in at least a part of the security label.
9. The security label according to 8., wherein after peeling, completion of the peeling can be discriminated by at least any of (1) to (3): (1) a character is left on an adherend; (2) at least a part of the adhesive laminate is broken; or (3) an adhesive strength is lost.

### EFFECT OF THE INVENTION

According to the present invention, it is possible to provide an adhesive laminate suitable for high-mix low-volume production without blurring of printing due to external rubbing or the like.

### MODE FOR CARRYING OUT THE INVENTION

Hereinafter, an adhesive laminate of the present invention will be described.

### 1. Configuration of adhesive laminate

### 1.1. Layer configuration and thickness

The adhesive laminate of the present invention should include at least one laser-printed layer capable of being printed by laser irradiation, and at least a part of the laser-printed layer should include a laser-printed portion and a non-printed portion. In the adhesive laminate of the present invention, other layers may be laminated in addition to the laser-printed layer, and it is preferred that a pressure-sensitive adhesive layer is provided on any one of the surfaces of the adhesive laminate particularly considering that the present invention preferably has adhesiveness. The adhesive laminate of the present invention may include a substrate layer intended to improve the mechanical strength of the adhesive laminate and the scratch resistance of the surface of the adhesive laminate, a release layer that facilitates peeling from an adherend, and a printed layer intended to improve the designability of the adhesive laminate. Here, the printed layer is a layer on which characters and patterns other than printing formed by laser are described. Moreover, in the adhesive laminate of the present invention, a gas barrier layer and an overcoat layer laminated on the gas barrier layer can also be provided as necessary in addition to the above. These preferred requirements will be described later. In order to improve properties such as printability and lubricity of the surface, all layers constituting a packaging of the present invention can be provided with layers subjected to corona treatment, coating treatment, flame treatment, and the like, and these layers can be provided optionally within the scope of the requirements of the present invention.

The thickness of the adhesive laminate is not particularly limited, but is preferably 5 um or more and 500 um or less. When the thickness of the adhesive laminate is less than 5 µm, the mechanical strength of the adhesive laminate may be insufficient, and the handling property of the adhesive laminate is also deteriorated, which is not preferred. The thickness of the adhesive laminate may be more than 500 µm, but the cost of the material to be used increases accordingly, which is not preferred. The thickness of the adhesive laminate is more preferably 10 um or more and 495 um or less, and still more preferably 15 um or more and 490 um or less.

The thickness of the laser-printed layer constituting the adhesive laminate of the present invention is preferably 3 um or more and 200 um or less. When the thickness is less than 3 µm, the visual perceptibility of laser printing may be diminished even when the concentration of a laser-printed pigment to be described later is increased. Meanwhile, when the thickness of the printed layer exceeds 200 um, the volume of the film that absorbs the laser is extremely large and causes great damage, and therefore the deformation or perforation of the adhesive laminate may occur. The thickness of the printed layer is more preferably 10 um or more and 195 um or less, and still more preferably 15 um or more and 190 um or less.

### 1.2. Laser printed layer

### 1.2.1. Types of laser-printed pigments, amounts thereof added, and methods for adding same

In order that the laser-printed layer constituting the present invention can be laser-printed, a laser-printed pigment having functionality permitting change in color when acted on by laser irradiation must be added thereto. Plastics constituting the laser-printed layer usually hardly react with laser light, and therefore cannot be printed by laser irradiation. The laser-printed pigment can be made to undergo excitation by the energy from laser light, making it possible for printing to take place as a result of carbonisation of the surrounding plastic. Besides the plastic carbonisation effect, there are laser-printed pigments which, depending on the type thereof, may themselves change color and become black. Simple or complex action of this carbonisation effect and laser-printed pigment color change effect makes it possible for printing to be carried out at the laser-printed layer. From the standpoint of printing density, it is preferred that a laser-printed pigment having both the plastic carbonisation effect and the effect whereby it itself changes color is selected.

Specific examples of the types of the laser-printed pigments include one of bismuth, gadolinium, neodymium, titanium, antimony, tin, and aluminum as a simple substance or an oxide. Among these, titanium oxide, calcium carbonate, bismuth trioxide, antimony trioxide, and barium sulfate are preferred, and titanium oxide, calcium carbonate and bismuth trioxide are more preferred. It is preferred that the particle diameter of the laser-printed pigment is 0.1 um or more and 10 um or less. When the particle diameter of the laser-printed pigment is less than 0.1 um, there is a possibility that change in color during laser irradiation is not adequate. Meanwhile, when the particle size of the laser-printed pigment exceeds 10 µm, there is a concern that the clogging of a filter in an extrusion step when the component (film) of the adhesive laminate is formed is accelerated. The particle diameter of the laser-printed pigment is more preferably 1 um or more and 9 um or less, and still more preferably 2 um or more and 8 um or less.

The amount of the laser-printed pigment added to the laser-printed layer is preferably 0.05% by mass or more and 50% by mass or less. When the amount of the pigment added is less than 0.05% by mass, the printing density produced by the laser is not adequate, which is not preferred. Meanwhile, when the amount of the pigment added exceeds 50% by mass, the amount (volume) of carbonized plastic is relatively decreased, which may also result in inadequate printing density. The amount of the laser-printed pigment added is more preferably 0.1% by mass or more and 49% by mass or less, still more preferably 0.15% by mass or more and 48% by mass or less, and particularly preferably 0.2% by mass or more and 47% by mass or less.

As a method for blending the laser-printed pigment, the laser-printed pigment can be added at any stage during the manufacture of a resin to be a raw material for the laser-printed layer or a film to be the laser-printed layer. For example, with regard to a step during manufacture of a resin, methods in which a vented kneader extruder is used to cause a plastic raw material and a slurry in which particles thereof are dispersed in a solvent to be blended, methods in which a kneader extruder is used to cause dried particles thereof and plastic resin to be blended (made into masterbatch), and so forth may also be cited. Among these, methods in which a masterbatch that contains a laser-printed pigment is used as a film raw material are preferred.

### 1.2.2. Types of Plastic

The type of the plastic constituting the laser-printed layer of the present invention is not particularly limited, and any type of the plastic can be freely used without departing from the gist of the present invention. Examples of the type of the plastic (resin) include polyester, polyolefin, polystyrene, polyvinyl chloride, and polyamide.

Examples of the polyester include polyethylene terephthalate (PET), polybutylene terephthalate (PBT), polyethylene naphthalate (PEN), polytrimethylene terephthalate (PTT), polybutylene naphthalate (PBN), polylactic acid (PLA), polyethylene furanoate (PEF), and polybutylene succinate (PBS). Moreover, in addition to the polyesters cited at the foregoing examples, modified polyesters in which the monomer at such acid site or diol site is altered may also be used. Examples of the acid-site monomer include isophthalic acid, 1,4-cyclohexanedicarboxylic acid, 2,6-naphthalenedicarboxylic acid, orthophthalic acid, and other such aromatic dicarboxylic acids, adipic acid, azelaic acid, sebacic acid, decanedicarboxylic acid, and other such aliphatic dicarboxylic acids, and alicyclic dicarboxylic acids. Examples of the diol-site monomer include neopentyl glycol, 1,4-cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, hexanediol, 1,4-butanediol, and other such long-chain diols, hexanediol and other such aliphatic diols, and bisphenol A and other such aromatic diols. Moreover, a polyester elastomer containing ε-caprolactone or tetramethylene glycol or the like may be contained as a component constituting the polyester. Regarding the polyester raw materials cited above, a plurality of types of homopolyesters obtained by polymerizing one type of carboxylic acid monomer and one type of diol monomer may be mixed and used (dry blended); and two or more types of carboxylic acid monomers or two or more types of diol monomers may be copolymerized and used. A homopolyester and a copolymerized polyester may be mixed and used.

The intrinsic viscosity (IV) of the polyester serving as a raw material is not particularly limited, and can be optionally selected, but the intrinsic viscosity is preferably 0.5 dL/g to 1.2 dL/g. When IV is less than 0.5 dL/g, the molecular weight of the raw material is too low, which increases the tendency for fracture to occur during film formation, and increases the tendency for the tensile fracture strength of a display body to fall below 40 MPa, and for other such problems to occur. Meanwhile, when IV exceeds 1.2 dL/g, the resin pressure at the time of an extruding process during film formation is too high. This is apt to cause the deformation of the filter and the like, which is not preferred. IV is more preferably 0.55 dL/g or more and 1.15 dL/g or less, and still more preferably 0.6 dL/g or more and 1.1 dL/g or less.

Examples of the polyolefin include polypropylene (PP) and polyethylene (PE). In a case where the polypropylene is used, the stereoregularity thereof is not particularly limited, and the polypropylene may isotactic, syndiotactic, or atactic polypropylene. Each of the polypropylenes may be contained in any percentage. In a case where the polyethylene is used, the density (degree of branching) thereof is not particularly limited, and the polyethylene may be high density (HDPE), linear low density (LLDPE), or low density (LDPE) polyethylene. Besides the foregoing homopolymers, raw materials in which two or more different types of monomers are copolymerized may be used. Examples of the monomers used for copolymerization include ethylene and α-olefins, and examples of the α-olefins include propylene, 1-butene, 1-pentene, 1-hexene, 1-heptene, 1-octene, 1-nonene, 1-decene, 4-methyl-1-pentene, and 4-methyl-1-hexene. The type of the copolymerization may be random copolymerization or block copolymerization. Moreover, besides the raw materials cited above, a polyolefin elastomer and an ionomer may be used.

The melt flow rate (MFR) of the polyolefin serving as the raw material is not particularly limited, and can be optionally selected, but the melt flow rate is preferably 1 g/10 min to 10 g/10 min. When the MFR is less than 1 g/10 min, the melt viscosity of the raw material is too high, and the resin pressure at the time of an extruding process during film formation is too high. This is apt to cause the deformation and the like of the filter, which is not preferred. Meanwhile, when the MFR exceeds 10 g/10 min, the molecular weight is extremely low, and therefore there is a possibility that fracture is apt to occur during film formation, and that blocking resistance is reduced. The MFR is more preferably 2 g/10 min or more and 8 g/10 min, and still more preferably 3 g/10 min or more and 7 g/10 min.

Examples of the polystyrene include homopolystyrene obtained by polymerizing only a styrene monomer, and a polymer obtained by copolymerizing different components therein. In a case where the homopolystyrene is used, the stereoregularity thereof is not particularly limited, and the homopolystyrene may isotactic, syndiotactic, or atactic homopolystyrene. Each of the homopolystyrenes may be contained in any percentage. In the case of a copolymer, any component may be used without departing from the gist of the present invention. Examples thereof include butadiene, isoprene, propylene, ethylene, acrylonitrile, and vinyl acetate, and these can be copolymerized in any ratio. A polystyrene-based elastomer may be used, and examples thereof include polymers obtained by block-copolymerizing an aromatic alkenyl compound and a conjugated diene. Examples of the aromatic alkenyl compound include styrene, tert-butylstyrene, α-methylstyrene, p-methylstyrene, p-ethylstyrene, divinylbenzene, 1,1-diphenylethylene, vinylnaphthalene, vinylanthracene, N,N-dimethyl-p-aminoethylstyrene, N,N-diethyl-p-aminoethylstyrene, and vinylpyridine. Examples of the conjugated diene monomer include 1,3-butadiene, 1,2-butadiene, isoprene, 2,3-dimethyl-butadiene, 1,3-pentadiene, 2-methyl-1,3-butadiene, 2-methyl-1,3-pentadiene, 1,3-hexadiene, 1,3-cyclohexadiene, 4,5-diethyl-1,3-octadiene, 3-butyl-1,3-octadiene, myrcene, chloroprene, and other such diolefins.

Examples of the polyamide include any one type of resin or a raw material mixture of two or more types of resins selected from polycaproamide (nylon 6), polyhexamethylene adipamide (nylon 66), caprolactam/lauryl lactam copolymer (nylon 6/12), caprolactam/hexamethylene diammonium adipate copolymer (nylon 6/66), ethylene ammonium adipate/hexamethylene diammonium adipate/hexamethylene diammonium sebacate copolymer (nylon 6/66/610), polymers of meta-xylylenediamine and adipic acid (MXD-6), and hexamethylene isophthalamide/terephthalamide copolymer (amorphous nylon). An adhesion improvement layer may be provided on the surface of the film containing any of the plastics cited above. Example of a material for the adhesion improvement layer include acrylic, a water-soluble or water-dispersible polyester, and a hydrophobic polyester in which acrylic is graft copolymerized.

It is preferred that the relative viscosity (RV) of the polyamide serving as the raw material is 2.2 or more and 4 or less. When the RV is less than 2.2, the crystallization rate is too high, and therefore the fracture or the like of the film may be apt to occur when stretching is carried out during film forming processes. Meanwhile, when the RV exceeds 4, a load on an extruder is too high, and therefore the deformation and the like of the filter is apt to occur, which is not preferred. The RV is more preferably 2.3 or more and 3.9 or less, and still more preferably 2.4 or more and 3.8 or less. The "relative viscosity" in the present invention means a value measured at 25°C using a solution in which 0.5 g of a polymer is dissolved in 50 ml of 97.5% sulfuric acid.

It is preferred that the type of the plastic constituting the laser-printed layer is mainly any of polyester, polypropylene, polyethylene, and polystyrene among those cited above from the viewpoint of mechanical strength, film forming stability, and laser printing performance.

The content of the plastic constituting the laser-printed layer is preferably 50% by mass or more and 99.95% by mass or less. When the content of the plastic falls below 50% by mass, the mass of the resin discolored by laser is reduced, and therefore the difference between color L* values of the printed portion and the non-printed portion is apt to fall below 1.0, which is not preferred.

When the content of the plastic exceeds 99.95% by mass, the content of the laser-printed pigment relatively falls below 0.05% by mass, and the difference between the color L* values of the printed portion and the non-printed portion is apt to fall below 1.0, which is not preferred. The content of the plastic is more preferably 51% by mass or more and 99.9% by mass or less, still more preferably 52% by mass or more and 99.85% by mass, and particularly preferably 53% by mass or more and 99.8% by mass or less. In a case where a plurality of laser-printed layers are present, the content of the plastic in all the laser-printed layers can be determined by proportionally dividing the thickness ratios and plastic contents of the respective layers.

### 1.2.3. Additives other than laser-printed pigment

Various additives, e.g., waxes, antioxidants, antistatic agents, crystal nucleating agents, viscosity-lowering agents, thermal stabilizers, colorant pigments, antistaining agents, and ultraviolet light absorbers and the like may be added as necessary in the laser-printed layer constituting the adhesive laminate of the present invention. In a case where the laser-printed layer is a surfacemost layer, it is preferred that microparticles serving as a lubricant for improving lubricity is added thereto. The microparticles may be optionally selected. Examples of inorganic microparticles include silica, alumina, kaolin, white lead, titanium white, zeolite, zinc oxide, and lithopone, and examples of organic microparticles include acrylic particles, melamine particles, silicone particles, crosslinked polystyrene particles, carbon black, and iron oxide. The average particle diameter of the microparticles when measured by means of a Coulter counter may be appropriately selected as necessary within the range 0.05 um to 3.0 um. The lower limit of the content rate of the microparticles is preferably 0.01% by mass, more preferably 0.015% by mass, and still more preferably 0.02% by mass. When the content rate of the microparticles is less than 0.01% by mass, lubricity may be reduced. The upper limit of the content rate of the microparticles is preferably 1% by mass, more preferably 0.2% by mass, and still more preferably 0.1% by mass. When the content rate of the microparticles exceeds 1% by mass, the smoothness of the surface may be reduced to cause problems such as faint printability, which is not preferred.

As a method for blending particles within the laser-printed layer, the particles may be added in any step during the manufacture of the plastic raw material, and the same method as that of the foregoing "1.2.1. Types of laser-printed pigments, amounts thereof added, and methods for adding same" can be adopted.

### 1.3. Pressure-sensitive adhesive layer

The pressure-sensitive adhesive layer that can constitute the adhesive laminate of the present invention is not particularly limited as long as the pressure-sensitive adhesive layer has adhesiveness, and conventionally known pressure-sensitive adhesive layers can be optionally used without departing from the gist of the present invention. Examples of the resin that can constitute the pressure-sensitive adhesive layer include polystyrene, polyester, polyolefin, polyurethane, and poly (meth)acrylic.

As the polystyrene resin, a styrene-based elastomer is suitably used in order to develop a high adhesive strength. Examples of the styrene-based elastomer include an A-B-A type block polymer such as styrene-butadienestyrene, an A-B type block polymer such as a styrene-butadiene copolymer, a hydrogenated product such as a block copolymer of a styrene-based polymer block and a random copolymer block of styrene and butadiene, a hydrogenated product of a styrene-based random copolymer such as a styrene-butadiene rubber, and a polymer obtained by block copolymerizing an aromatic alkenyl compound and a conjugated diene. Examples of the aromatic alkenyl compound include styrene, tert-butylstyrene, α-methylstyrene, p-methylstyrene, p-ethylstyrene, divinylbenzene, 1,1-diphenylethylene, vinylnaphthalene, vinylanthracene, N,N-dimethyl-p-aminoethylstyrene, N,N-diethyl-p-aminoethylstyrene, and vinylpyridine. Examples of a conjugated diene monomer include 1,3-butadiene, 1,2-butadiene, isoprene, 2,3-dimethyl-butadiene, 1,3-pentadiene, 2-methyl-1,3-butadiene, 2-methyl-1,3-pentadiene, 1,3-hexadiene, 1,3-cyclohexadiene, 4,5-diethyl-1,3-octadiene, 3-butyl-1,3-octadiene, myrcene, chloroprene, and other such diolefins.

Examples of the polyester include modified polyesters containing, as a basic skeleton, polyethylene terephthalate (PET), polybutylene terephthalate (PBT), polyethylene naphthalate (PEN), polytrimethylene terephthalate (PTT), polybutylene naphthalate (PBN), polylactic acid (PLA), polyethylene furanoate (PEF), or polybutylene succinate (PBS) or the like, and having monomers at acid or diol moieties thereof changed. Examples of the acid-site monomer include isophthalic acid, 1,4-cyclohexanedicarboxylic acid, 2,6-naphthalenedicarboxylic acid, orthophthalic acid, and other such aromatic dicarboxylic acids, adipic acid, azelaic acid, sebacic acid, decanedicarboxylic acid, and other such aliphatic dicarboxylic acids, and alicyclic dicarboxylic acids. Examples of the diol-site monomer include neopentyl glycol, 1,4-cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, hexanediol, 1,4-butanediol, and other such long-chain diols, hexanediol and other such aliphatic diols, and bisphenol A and other such aromatic diols. Moreover, a polyester elastomer containing ε-caprolactone or tetramethylene glycol or the like may be contained as a component constituting the polyester. Regarding the polyester raw materials cited above, a plurality of types of homopolyesters obtained by polymerizing one type of carboxylic acid monomer and one type of diol monomer may be mixed and used (dry blended); and two or more types of carboxylic acid monomers or two or more types of diol monomers may be copolymerized and used. A homopolyester and a copolymerized polyester may be mixed and used. Among the polyesters mentioned above, when the glass transition temperature (Tg) is lower than room temperature (about 25°C), the adhesiveness of the pressure-sensitive adhesive layer at room temperature is likely to be developed, which is preferred.

Examples of the polyolefin include a polyethylene-based or polypropylene-based polyolefin. Specific examples thereof include polyethylenes such as low-density polyethylene, medium-density polyethylene, high-density polyethylene, and linear low-density polyethylene, polypropylene, a copolymer of ethylene and propylene, a copolymer of ethylene and another α-olefin, a copolymer of propylene and another α-olefin, a copolymer of ethylene, propylene, and another α-olefin, and a copolymer of ethylene and another ethylenically unsaturated monomer (ethylene-vinyl acetate copolymer, ethylene-alkyl (meth)acrylate copolymer, and the like). Examples of the α-olefin include 1-butene, 1-pentene, 1-hexene, 1-heptene, 1-octene, 4-methyl-1-pentene, and 4-methyl-1-hexene. Examples of the ethylenically unsaturated monomer include vinyl acetate, alkyl (meth)acrylate, and vinyl alcohol.

The melt flow rate (MFR) of the polyolefin serving as the raw material is not particularly limited, and can be optionally selected, but the melt flow rate is preferably 1 g/10 min to 10 g/10 min. When the MFR is less than 1 g/10 min, the melt viscosity of the raw material is too high, and the resin pressure at the time of an extruding process during film formation is too high. This is apt to cause the deformation and the like of the filter, which is not preferred. Meanwhile, when the MFR exceeds 10 g/10 min, the molecular weight is extremely low, and therefore there is a possibility that fracture is apt to occur during film formation, and that blocking resistance is reduced. The MFR is more preferably 2 g/10 min or more and 8 g/10 min, and still more preferably 3 g/10 min or more and 7 g/10 min.

The polyurethane-based resin is not particularly limited as long as the polyurethane-based resin is a polymer having one or more of a urethane bond and a urea bond in at least one of a main chain and a side chain. Specific examples of the urethane-based resin include a urethane-based prepolymer (UX) obtained by reacting a polyol with a polyvalent isocyanate compound. Examples of the polyol as a raw material of the urethane-based prepolymer (UX) include polyol compounds such as an alkylene polyol, a polyether polyol, a polyester polyol, a polyester amide polyol, a polyester/polyether polyol, and a polycarbonate polyol, but the polyol is not particularly limited, and may be a bifunctional diol or a trifunctional triol. These polyols may be used singly or in combination of two or more kinds thereof. Among these polyols, a diol is preferred, and an alkylene diol is more preferred from the viewpoint of easy availability and reactivity and the like. Examples of the alkylene diol include alkanediols such as 1,3-propanediol, 1,4-butanediol, 1,5-pentanediol, neopentyl glycol, and 1,6-hexanediol; alkylene glycols such as ethylene glycol, propylene glycol, diethylene glycol, and dipropylene glycol; polyalkylene glycols such as polyethylene glycol, polypropylene glycol, and polybutylene glycol; and polyoxyalkylene glycols such as polytetramethylene glycol.

Examples of the polyvalent isocyanate compound as a raw material of the urethane-based prepolymer (UX) include aromatic polyisocyanates, aliphatic polyisocyanates, and alicyclic polyisocyanates. Examples of the aromatic polyisocyanates include 1,3-phenylene diisocyanate, 1,4-phenylene diisocyanate, 4,4'-diphenylmethane diisocyanate (MDI), 2,4-tolylene diisocyanate (2,4-TDI), 2,6-tolylene diisocyanate (2,6-TDI), 4,4' -toluidine diisocyanate, 2,4,6-triisocyanate toluene, 1,3,5-triisocyanate benzene, dianisidine diisocyanate, 4,4'-diphenyl ether diisocyanate, 4,4',4"-triphenylmethane triisocyanate, 1,4-tetramethylxylylene diisocyanate, and 1,3-tetramethylxylylene diisocyanate.

Examples of the aliphatic polyisocyanates include trimethylene diisocyanate, tetramethylene diisocyanate, hexamethylene diisocyanate (HMDI), pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the alicyclic polyisocyanates include 3-isocyanatomethyl-3,5,5-trimethylcyclohexyl isocyanate (IPDI: isophorone diisocyanate), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), 1,4-bis(isocyanatomethyl)cyclohexane, and 1,4-bis(isocyanatomethyl)cyclohexane.

The mass average molecular weight (Mw) of the polyurethane-based resin is preferably 10000 to 200000, more preferably 12000 to 150000, still more preferably 15000 to 100000, and still more preferably 20000 to 70000.

The (meth)acrylic resin may be a copolymer of an acrylic monomer or a copolymer of an acrylic monomer and another copolymerizable monomer. As the acrylic monomer include, for example, (meth)acrylate, methyl (meth)acrylate, ethyl (meth)acrylate, propyl (meth)acrylate, isopropyl acrylate, n-butyl (meth)acrylate, isobutyl acrylate, t-butyl (meth)acrylate, n-amyl (meth)acrylate, isoamyl (meth)acrylate, n-hexyl (meth)acrylate, 2-ethylhexyl (meth)acrylate, n-octyl (meth)acrylate, decyl (meth)acrylate, octadecyl (meth)acrylate, lauryl (meth)acrylate, stearyl (meth)acrylate, and other such (meth)acrylic acid alkyl esters; cyclohexyl (meth)acrylate, benzyl (meth)acrylate, phenyl (meth)acrylate, and other such (meth)acrylic acid cyclic esters; allyl (meth)acrylate, 1-methylallyl (meth)acrylate, 2-methylallyl (meth)acrylate, and other such vinyl (meth)acrylates and other such unsaturated-group-containing (meth)acrylic acid esters; glycidyl (meth)acrylate, (3,4-epoxycyclohexyl)methyl (meth)acrylate, and other such heterocycle-containing (meth)acrylic acid esters; N-methylaminoethyl (meth)acrylate, N-tributylaminoethyl (meth)acrylate, N,N-dimethylaminoethyl (meth)acrylate, and other such amino-group containing (meth)acrylic acid esters; 3-methacryloxypropyltrimethoxysilane and other such alkoxysilyl-group-containing (meth)acrylic acid esters; methoxyethyl (meth)acrylate, ethylene oxide adduct of (meth)acrylic acid, and other such (meth)acrylic acid derivatives; perfluoroethyl (meth)acrylate, perfluorobutyl (meth)acrylate, and other such (meth)acrylic acid perfluoroalkyl esters; trimethylolpropane tri(meth)acrylate and other such polyfunctional (meth)acrylic acid esters. Examples of the monomers other than acrylic monomers that are capable of being copolymerized include maleic acid, maleic anhydride, itaconic acid, and itaconic anhydride as monomers having at least one carboxyl group at a radical polymerizable unsaturated group. Besides the radical polymerizable unsaturated groups, examples of monomers having at least one hydroxyl group include 2-hydroxyethyl (meth)acrylate, 2-hydroxypropyl (meth)acrylate, 2-hydroxybutyl (meth)acrylate, and diethylene glycol mono(meth)acrylate. Moreover, examples of vinyl monomers and the like which are capable of being copolymerized with the acrylic monomer include styrene, α-styrene, and other such aromatic vinyl-based monomers; vinyltrimethoxysilane and other such trialkyloxysilyl-group-containing vinyl monomers; acrylonitrile, methacrylonitrile, and other such nitrile-group-containing vinyl-based monomers; acrylamide- and methacrylamide-group-containing vinyl-based monomers; vinyl acetate, vinyl versatate, and other such vinyl esters.

The above-mentioned kinds of plastics as raw materials can be optionally used as a film formed by any of non-stretching, uniaxial stretching, and biaxial stretching, or a coating agent dispersed in a solvent or the like. In a case of forming a film, unstretching or uniaxial stretching is preferred, and unstretching is more preferred, in order to develop adhesiveness. In this case, the laser-printed layer and the pressure-sensitive adhesive layer may be laminated with an adhesive layer to be described later, interposed therebetween, or the pressure-sensitive adhesive layer may be laminated in the extrusion step when the laser-printed layer is formed.

The thickness of the pressure-sensitive adhesive layer constituting the adhesive laminate of the present invention is preferably 1 um or more and 50 um or less. When the thickness of the pressure-sensitive adhesive layer falls below 1 µm, the bonding strength between the adhesive laminate and the container is lowered, which is not preferred. When the thickness of the pressure-sensitive adhesive layer exceeds 50 µm, the bonding strength between the adhesive laminate and the container is improved, but the thickness of the laser-printed layer is relatively reduced, and the visibility of printing is reduced. In addition, blocking is apt to occur when the laminate is wound up as a roll, which is not preferred. The thickness of the pressure-sensitive adhesive layer is more preferably 1.5 um or more and 40 um or less, and still more preferably 2 um or more and 30 um or less.

### 1.4. Laminating agent

As a laminating agent that can be used when each layer of the adhesive laminate of the present invention is laminated, an adhesive for dry lamination or a resin layer formed by extrusion lamination can be used, and conventionally known ones can be optionally employed. The adhesive may be either a one liquid type (drying type) or a two liquid type (curing reaction type). In the case of dry lamination, commercially available polyurethane-based and polyester-based adhesives for dry lamination can be used. Representative examples include Dicdry (registered trademark) LX-703VL manufactured by DIC Corporation; KR-90 manufactured by DIC Corporation; Takenate (registered trademark) A-4 manufactured by Mitsui Chemicals, Inc.; and Takelac (registered trademark) A-905 manufactured by Mitsui Chemicals, Inc. In the case of the extrusion lamination, a polyolefin-based resin such as polyethylene is melted between layers or between a layer and another layer for bonding, but it is also preferred to laminate an anchor coat layer in order to enhance the adhesiveness of the surface of the layer and the like.

In a case of laminating films with a laminating agent interposed therebetween, the lamination is completed as the laminating agent is applied to either film, and then dried or reacted and cured. In the adhesive laminate of the present invention, the lamination layer thickness after drying is preferably 1 um or more and 6 um or less, and more preferably 2 um or more and 5 um or less. When the thickness of the lamination layer after drying falls below 1 µm, delamination is apt to occur, which is not preferred. Meanwhile, when the lamination layer thickness after drying exceeds 6 µm, a drying time required for curing the laminating agent is long, resulting a decrease in the productivity of the adhesive laminate, which is not preferred.

### 1.5. Substrate layer

Examples of the type of the plastic constituting the substrate layer that can be preferably included in the adhesive laminate of the present invention include polyester, polyolefin, and polyamide.

Examples of the polyester include polyethylene terephthalate (PET), polybutylene terephthalate (PBT), polyethylene naphthalate (PEN), polytrimethylene terephthalate (PTT), polybutylene naphthalate (PBN), polylactic acid (PLA), polyethylene furanoate (PEF), and polybutylene succinate (PBS). Moreover, in addition to the polyesters cited at the foregoing examples, modified polyesters in which the monomer at such acid site or diol site is altered may also be used. Examples of the acid-site monomer include isophthalic acid, 1,4-cyclohexanedicarboxylic acid, 2,6-naphthalenedicarboxylic acid, orthophthalic acid, and other such aromatic dicarboxylic acids, adipic acid, azelaic acid, sebacic acid, decanedicarboxylic acid, and other such aliphatic dicarboxylic acids, and alicyclic dicarboxylic acids. Examples of the diol-site monomer include neopentyl glycol, 1,4-cyclohexanedimethanol, diethylene glycol, 2,2-diethyl-1,3-propanediol, 2-n-butyl-2-ethyl-1,3-propanediol, 2,2-isopropyl-1,3-propanediol, 2,2-di-n-butyl-1,3-propanediol, hexanediol, 1,4-butanediol, and other such long-chain diols, hexanediol and other such aliphatic diols, and bisphenol A and other such aromatic diols. Moreover, a polyester elastomer containing ε-caprolactone or tetramethylene glycol or the like may be contained as a component constituting the polyester. Regarding the polyester raw materials cited above, a plurality of types of homopolyesters obtained by polymerizing one type of carboxylic acid monomer and one type of diol monomer may be mixed and used (dry blended); and two or more types of carboxylic acid monomers or two or more types of diol monomers may be copolymerized and used. A homopolyester and a copolymerized polyester may be mixed and used.

Examples of the polyolefin include polypropylene (PP) and polyethylene (PE). In a case where the polypropylene is used, the stereoregularity thereof is not particularly limited, and the polypropylene may isotactic, syndiotactic, or atactic polypropylene. Each of the polypropylenes may be contained in any percentage. In a case where the polyethylene is used, the density (degree of branching) thereof is not particularly limited, and the polyethylene may be high density (HDPE), linear low density (LLDPE), or low density (LDPE) polyethylene. Besides the foregoing homopolymers, raw materials in which two or more different types of monomers are copolymerized may be used. Examples of the monomers used for copolymerization include ethylene and α-olefins, and examples of the α-olefins include propylene, 1-butene, 1-pentene, 1-hexene, 1-heptene, 1-octene, 1-nonene, 1-decene, 4-methyl-1-pentene, and 4-methyl-1-hexene. The type of the copolymerization may be random copolymerization or block copolymerization. Moreover, besides the raw materials cited above, a polyolefin elastomer and an ionomer may be used.

The melt flow rate (MFR) of the polyolefin serving as the raw material is not particularly limited, and can be optionally selected, but the melt flow rate is preferably 1 g/10 min to 10 g/10 min. When the MFR is less than 1 g/10 min, the melt viscosity of the raw material is too high, and the resin pressure at the time of an extruding process during film formation is too high. This is apt to cause the deformation and the like of the filter, which is not preferred. Meanwhile, when the MFR exceeds 10 g/10 min, the molecular weight is extremely low, and therefore there is a possibility that fracture is apt to occur during film formation, and that blocking resistance is reduced. The MFR is more preferably 2 g/10 min or more and 8 g/10 min, and still more preferably 3 g/10 min or more and 7 g/10 min.

Examples of the polyamide include any one type of resin or a raw material mixture of two or more types of resins selected from polycaproamide (nylon 6), polyhexamethylene adipamide (nylon 66), caprolactam/lauryl lactam copolymer (nylon 6/12), caprolactam/hexamethylene diammonium adipate copolymer (nylon 6/66), ethylene ammonium adipate/hexamethylene diammonium adipate/hexamethylene diammonium sebacate copolymer (nylon 6/66/610), polymers of meta-xylylenediamine and adipic acid (MXD-6), and hexamethylene isophthalamide/terephthalamide copolymer (amorphous nylon). An adhesion improvement layer may be provided on the surface of the film containing any of the plastics cited above. Example of a material for the adhesion improvement layer include acrylic, a water-soluble or water-dispersible polyester, and a hydrophobic polyester in which acrylic is graft copolymerized.

The lower limit of the relative viscosity (RV) of polyamide serving as the raw material is preferably 2.2, and more preferably 2.3. When the RV is less than the above, a crystallization rate is too high, which may result in difficult biaxial stretching. Meanwhile, the upper limit of the RV of polyamide is preferably 4, and more preferably 3.9. When the RV exceeds the above, there is a possibility that a load or the like on an extruder is too high, resulting in a decrease in productivity. The "relative viscosity" in the present invention means a value measured at 25°C using a solution in which 0.5 g of a polymer is dissolved in 50 ml of 97.5% sulfuric acid.

The plastic of any of the types described above as a raw material may be optionally used as a film formed so as to be unstretched, uniaxially stretched, or biaxially stretched, or as a coating agent in which the plastic is dispersed in a solvent or the like. In a case of forming a film, the film is preferably uniaxially stretched or biaxially stretched, and more preferably biaxially stretched for achievement of mechanical strength. In this case, the printed layer and the substrate layer may be laminated with an adhesive layer to be described later interposed therebetween, or the substrate layer may be laminated during the extrusion process when the printed layer is formed.

The substrate layer preferably contains a lubricant in order to improve the lubricity, and the concentration thereof contained is preferably 100 ppm or more and 2000 ppm or less. When the concentration of the lubricant fall below 100 ppm, the lubricity deteriorates, and thus not only position shift and the like occurs when a laminated body is fabricated (bonded) but also the handling properties decrease when the laminated body is formed, which is not preferred. Meanwhile, the concentration of the lubricant exceeds 2000 ppm, the transparency of the substrate layer decreases, which is not preferred. The concentration of the lubricant is more preferably 200 ppm or more and 1900 ppm or less, and still more preferably 300 ppm or more and 1800 ppm or less.

To cause the printing properties and lubricity of the surface of the substrate layer to be made satisfactory, a layer subjected to corona treatment, coating treatment, and flame treatment and the like can also be provided on the substrate layer, and the layer can be optionally provided without departing from the requirements of the present invention.

### 1.6. Release layer

The release layer that can be optionally laminated on the adhesive laminate of the present invention is preferably provided on the surface opposite to the pressure-sensitive adhesive layer. The provision of the release layer makes it possible to suppress or reduce blocking occurring when films are stacked by winding the adhesive laminate as a roll or the like.

In order to suppress blocking, it is preferred to form unevenness on the surface of the release layer or use a resin incompatible with the pressure-sensitive adhesive layer for the release layer. In order to form the unevenness on the surface of the release layer, it is effective to form a sea-island structure by mixing an incompatible resin in the resin constituting the release layer.

As the resin constituting the release layer, any resin can be selected from the resins listed in "1.3. Pressure-sensitive adhesive layer" and "1.5. Substrate layer". As the resin incompatible with the pressure-sensitive adhesive layer or the release layer, a resin type different from the resin selected as the pressure-sensitive adhesive layer or the release layer may be used. For example, when a polystyrene-based resin is used for the release layer and unevenness is to be formed on the surface of the release layer, polyester, polyester, polyolefin, polyurethane, or poly (meth)acrylic or the like can be selected as the resin incompatible with the release layer.

When the unevenness is formed on the surface of the release layer, the three-dimensional average surface roughness SRa of the surface of the release layer is preferably 0.10 um or more and 0.50 um or less. When the surface roughness of the release layer falls below 0.10 um, blocking when the film is wound up as a roll increases, which is not preferred. When the surface roughness of the release layer exceeds 0.50 um, the surface unevenness of the release layer may be transferred to the surface of the pressure-sensitive adhesive layer, resulting in a decrease in the adhesive strength, which is not preferred. The surface SRa of the release layer is more preferably 0.15 um or more and 0.45 um or less.

When the resin incompatible with the pressure-sensitive adhesive layer is used, the resin constituting the release layer is not particularly limited, and a silicone resin, a fluororesin, an alkyd resin, various waxes, and an aliphatic olefin and the like can be used, and the resins can be used alone or in combination of two or more thereof.

As the release layer in this case, for example, the silicone resin is a resin having a silicone structure in the molecule, and examples thereof include a curing type silicone, a silicone graft resin, and a modified silicone resin such as alkyl-modified silicone resin. It is preferred to use a reactive cured silicone resin from the viewpoint of transferability and the like. As the reactive cured silicone resin, an addition reaction type silicone resin, a condensation reaction type silicone resin, and an ultraviolet ray or electron beam curing type silicone resin and the like can be used. A low-temperature-curable addition reaction type silicone resin capable of being processed at a low temperature, and an ultraviolet ray or electron beam curing type silicone resin are more preferred. The use of the resins makes it possible to perform processing at a low temperature when the release layer is laminated on the film.

Examples of the addition reaction type silicone resin include an addition reaction type silicone resin in which polydimethylsiloxane having a vinyl group introduced at a terminal or a side chain is reacted with hydrodienesiloxane using a platinum catalyst to be cured. At this time, it is more preferred to use a resin that can be cured at 120°C within 30 seconds because processing can be performed at a low temperature. Examples thereof include low-temperature addition curing type silicone resins (LTC1006L, LTC1056L, LTC300B, LTC303E, LTC310, LTC314, LTC350G, LTC450A, LTC371G, LTC750A, LTC755, and LTC760A and the like) and thermal UV curing type silicone resins (LTC851, BY24-510, BY24-561, and BY24-562 and the like) manufactured by Dow Corning Toray Co., Ltd., and solvent addition + UV curing type silicone resins (X62-5040, X62-5065, X62-5072T, and KS5508 and the like) and dual-cure curing type silicone resins (X62-2835, X62-2834, and X62-1980 and the like) manufactured by Shin-Etsu Chemical Co., Ltd.

Examples of the condensation reaction type silicone resin include a silicone resin in which polydimethylsiloxane having an OH group at a terminal and polydimethylsiloxane having an H group at a terminal are subjected to a condensation reaction using an organotin catalyst to form a three-dimensional crosslinked structure.

Examples of the ultraviolet curing type silicone resin include, as the most basic type, a silicone resin utilizing the same radical reaction as that of usual silicone rubber crosslinking, a silicone resin photocured by introducing an unsaturated group, a silicone resin in which an onium salt is decomposed with ultraviolet rays to generate a strong acid, and an epoxy group is cleaved and crosslinked by the strong acid, and a silicone resin crosslinked by the addition reaction of thiol to vinylsiloxane.

An electron beam can also be used instead of the ultraviolet rays. The electron beam has higher energy than that of the ultraviolet rays, and makes it possible to perform a crosslinking reaction by radicals without using an initiator as in the case of ultraviolet curing. Examples of the resin to be used include UV-curing type silicones (X62-7028A/B, X62-7052, X62-7205, X62-7622, X62-7629, and X62-7660 and the like) manufactured by Shin-Etsu Chemical Co., Ltd., UV-curing type silicones (TPR6502, TPR6501, TPR6500, UV9300, UV9315, XS56-A2982, and UV9430 and the like) manufactured by Momentive Performance Materials Inc., and UV-curing type silicones (Silicoleases UV POLY200, POLY215, POLY201, and KF-UV265AM and the like) manufactured by Arakawa Chemical Industries, Ltd.

As the ultraviolet curing type silicone resin, acrylate-modified or glycidoxy-modified polydimethylsiloxane or the like can also be used. Even when these modified polydimethylsiloxanes are mixed with a polyfunctional acrylate resin or an epoxy resin or the like, and used in the presence of an initiator, good release performance can be exhibited.

As other examples of the resin to be used, a stearyl-modified or lauryl-modified alkyd resin or acrylic resin, or an alkyd resin or acrylic resin or the like obtained by the reaction of methylated melamine or the like is also suitable.

Examples of an aminoalkyd resin obtained by the reaction of methylated melamine or the like include Tesfine 303, Tesfine 305, and Tesfine 314 manufactured by Hitachi Chemical Co., Ltd. Examples of the aminoacrylic resin obtained by the reaction of methylated melamine or the like include Tesfine 322 manufactured by Hitachi Chemical Co., Ltd.

When the resin is used for the release layer in the present invention, one type of resin may be used, or two or more types thereof may be used in combination. It is also possible to mix additives such as a light peeling additive and a heavy peeling additive in order to adjust a peeling force.

### 1.7. Gas barrier layer

The gas barrier layer that can be optionally laminated on the adhesive laminate of the present invention is preferably composed of an inorganic thin film containing a metal or a metal oxide as a main component. In addition to the gas barrier layer composed of the inorganic thin film, the gas barrier layer may further include an anchor coat layer provided under the inorganic thin film layer (between the plastic film and the inorganic thin film) and an overcoat layer provided above the inorganic thin film layer. By providing these layers, improvement in close contact properties to the gas barrier layer, and improvement in gas barrier properties, and the like can be expected.

The type of a raw material for the gas barrier layer is not particularly limited, and conventionally known materials can be used, and the raw material can be appropriately selected according to the purpose in order to satisfy the desired gas barrier properties and the like. Examples of the type of the raw material for the gas barrier layer include metals such as silicon, aluminum, tin, zinc, iron, and manganese, and inorganic compounds containing one or more of these metals, and examples of the inorganic compounds include oxides, nitrides, carbides, and fluorides. These inorganic substances or inorganic compounds may be used singly or in combination.

In a case where the gas barrier layer is transparent, silicon oxide (SiOx) and aluminum oxide (AlOx) can be used singly (simple substances) or in combination (binary substances). In a case where the component of the inorganic compound consists of a binary substance of silicon oxide and aluminum oxide, the content of the aluminum oxide is preferably 20% by mass or more and 80% by mass or less, and more preferably 25% by mass or more and 70% by mass or less. In a case where the content of the aluminum oxide is 20% by mass or less, the density of the gas barrier layer may decrease, resulting in a decrease in the gas barrier properties, which is not preferred. When the content of the aluminum oxide is 80% by mass or more, the flexibility of the gas barrier layer decreases, which is apt to cause cracking to occur. As a result, the gas barrier properties may decrease, which is not preferred.

When an oxygen/metal element ratio in the metal oxide used for the gas barrier layer is preferably 1.3 or more and less than 1.8, there is little variation in gas barrier properties and excellent gas barrier properties can always be acquired, which is preferred. The oxygen/metal element ratio can be determined by measuring the amounts of the respective elements of oxygen and metal by X-ray photoelectron spectroscopy (XPS) and calculating the oxygen/metal element ratio.

The thickness of the gas barrier layer that can be preferably used in the adhesive laminate of the present invention is preferably 2 nm or more and 100 nm or less in a case where a metal or a metal oxide is vapor-deposited and used as a gas barrier layer. When the thickness of the layer falls below 2 nm, the gas barrier properties are apt to decrease, which is not preferred. Meanwhile, when the thickness of the layer exceeds 100 nm, there is no corresponding effect of improving the gas barrier properties, and the manufacturing cost increases, which is not preferred. The thickness of the inorganic thin film layer is more preferably 5 nm or more and 97 nm or less, and still more preferably 8 nm or more and 94 nm or less.

In a case where a metal foil is used as the gas barrier layer, the thickness of the metal foil is preferably 3 um or more and 100 um or less. When the thickness of the layer falls below 3 µm, the gas barrier properties are apt to decrease, which is not preferred. Meanwhile, when the thickness of the layer exceeds 100 nm, there is no corresponding effect of improving the gas barrier properties, and the manufacturing cost increases, which is not preferred. The thickness of the inorganic thin film layer (metal foil) is more preferably 5 um or more and 97 um or less, and still more preferably 8 um or more and 94 um or less.

In a case where the gas barrier layer is opaque, the gas barrier layer can be formed by bonding an aluminum foil or vapor-depositing aluminum. The thickness of the aluminum foil is preferably 1 um or more and 100 um or less.

The adhesive laminate including the gas barrier layer thus provided preferably has a water vapor transmission rate of 0.05 [g/(m²·d)] or more and 4 [g/(m²·d)] or less in an environment having a temperature of 40°C and a relative humidity of 90% RH. When the water vapor transmission rate exceeds 4 [g/(m²·d)], the shelf life of contents is shortened in a case where an adhesive laminate containing the contents is used, which is not preferred. Meanwhile, the water vapor transmission rate is less than 0.05 [g/(m²·d)], the gas barrier properties are enhanced and the shelf life of the contents is extended, which is preferred, but the lower limit of the water vapor transmission rate is 0.05 [g/(m²·d)] in the current technical level. When the lower limit of the water vapor transmission rate is 0.05 [g/(m²·d)], it can be said that the water vapor transmission rate is practically adequate. The upper limit of the water vapor transmission rate is preferably 3.8 [g/(m²·d)], and more preferably 3.6 [g/ (m²·d)].

The adhesive laminate including the gas barrier layer preferably has an oxygen transmission rate of 0.05 [cc/(m²·d·atm)] or more and 4 [cc/(m²·d·atm)] or less in an environment having a temperature of 23°C and a relative humidity of 65% RH. When the oxygen transmission rate exceeds 4 [cc/(m²·d·atm)], the shelf life of the contents is shortened, which is not preferred. Meanwhile, in a case where the oxygen transmission rate is less than 0.05 [cc/(m²·d·atm)], the gas barrier properties are enhanced and the shelf life of the contents is extended, which is preferred, but the lower limit of the oxygen transmission rate is 0.05 [cc/(m²·d·atm)] in the current technical level. When the lower limit of the oxygen transmission rate is 0.05 [cc/(m²·d·atm)], it can be said that the oxygen transmission rate is practically adequate. The upper limit of the oxygen transmission rate is preferably 3.8 [cc/(m²·d·atm)], and more preferably 3.6 [cc/(m²·d·atm)].

In the gas barrier adhesive laminate using the adhesive laminate of the present invention (in this section, these are collectively referred to as an "adhesive laminate"), the gas barrier layer may be laminated, followed by providing an overcoat layer on the gas barrier layer for the purpose of improving scratch resistance and further improving gas barrier properties, and the like.

The type of the overcoat layer is not particularly limited, but conventionally known materials, such as compositions containing urethane-based resins and silane coupling agents, compounds containing organosilicon and hydrolysates thereof, and water-soluble polymers having hydroxyl or carboxyl groups, can be used, and the materials can be appropriately selected according to the purpose in order to satisfy the desired gas barrier properties and the like.

For the purpose of imparting antistatic properties, ultraviolet absorbency, coloring, thermal stability, and lubricity and the like, one or more of various additives may be added to the overcoat layer as long as the object of the present invention is not impaired, and the types and amounts of the various additives can be appropriately selected according to the desired purpose.

### 1.8. Printed Layer

In addition to printing by laser irradiation, the adhesive laminate of the present invention may be provided with characters and patterns for the purpose of improving designability. As materials for forming these characters and patterns, known materials such as ink for gravure printing and ink for flexographic printing can be used. Regarding the number of printed layers, there may be one such layer or there may be a plurality of such layers. So as to be able to improve designability by printing a plurality of colors, it is preferred that there is a printed layer that includes a plurality of layers. The printed layer may be positioned either at an outermost layer or an intermediate layer.

### 2. Properties of adhesive laminate

### 2.1. Difference between color L* Values (non-printed portion - printed portion)

In the adhesive laminate of the present invention, it is required that the absolute value of the difference between the color L* values of the printed portion and the non-printed portion (hereinafter sometimes referred to simply as a "difference between L* values") is 1.0 or more and 10.0 or less. When this difference is less than 1.0, the color tones of the printed portion and non-printed portion are close to each other, which makes it difficult to visually recognize the printing. Meanwhile, when the difference between the L* values exceeds 10.0, the printing is likely to be visually recognized, but it is necessary to increase the power of laser irradiation accordingly. This causes not only problems such as perforation being apt to occur due to increased damage to the adhesive laminate, but also a decreased display area due to a relatively increased printed size, which is not preferred. The difference between the L* values is more preferably 1.5 or more and 9.5 or less, and still more preferably 2.0 or more and 9.0 or less.

### 2.2. Size of printing

With regard to the size of printing formed on the adhesive laminate of the present invention by laser, either a height or a width is preferably 0.2 mm or more and 100 mm or less. As it is said that the resolving power of the human eye is on the order of 0.2 mm, and when the size of a character falls below 0.2 mm, the difference between color L* values is apt to be less than 1.0, making recognition of printing difficult. Meanwhile, when the size of printing exceeds 100 mm, the printing is easily recognized, which is preferred, but when the size of printing is too large, the amount of information described on the adhesive laminate is small, which is not preferred. The size of printing is more preferably 0.5 mm or more and 90 mm or less, still more preferably 1 mm or more and 80 mm or less.

### 2.3. Adhesive strength

The adhesive laminate of the present invention preferably has an adhesive strength with an acrylic plate at 23°C of 0.2 N/25 mm or more and 20 N/25 mm. When the adhesive strength is less than 0.2 N/25 mm, the adhesive laminate is easily peeled off from the adherend, and therefore the adhesive laminate cannot function as an adhesive body, which is not preferred. Meanwhile, when the adhesive strength exceeds 20 N/25 mm, it is difficult to peel off the adhesive laminate from the adherend, and there is a possibility that the adhesive laminate remains on the adherend to cause the contamination of the adherend, which is not preferred. The adhesive strength with the acrylic plate at 23°C is more preferably 0.5 N/25 mm or more and 19 N/25 mm, and still more preferably 1 N/25 mm or more and 18 N/25 mm.

### 3. Production conditions

### 3.1. Laser-printed layer, substrate layer

The laser-printed layer and the substrate layer constituting the adhesive laminate of the present invention can be produced by methods and conditions to be described below. Here, the laser-printed layer will be described as an example.

### 3.1.1. Mixing and supply of raw materials

In manufacturing the laser-printed layer included in the adhesive laminate of the present invention, it is necessary to add the laser-printed pigment described in the above "1.2.1. Types of laser-printed pigments, amounts thereof added, and methods for adding same".

The laser-printed pigment is a metal, and thus usually has a higher specific gravity than that of the resin constituting the film. When two or more types of raw materials having different specific gravities are mixed and fed to an extruder, variation (segregation) is apt to occur in the supply of the raw materials. To prevent such variation, it is preferred that an agitator is installed at a hopper and a plumbing immediately above the extruder, that a plumbing (inner piping) is inserted within a hopper immediately above the extruder filled with a base resin to supply a laser-printed pigment, that tapered collars for lowering the granular pressure of raw materials are installed at respective raw material hoppers, and that other such strategies are adopted to carry out melt extrusion.

### 3.1.2. Melt extrusion

A laser-printed layer may be obtained by causing raw materials supplied in "3.1.1. Mixing and supply of raw materials" to be melt-extruded by an extruder to form an unstretched film, and causing the unstretched film to undergo the prescribed step indicated below. A substrate layer may be laminated together with the laser-printed layer in the extrusion step, and each layer can be laminated at optional timing. It is preferred to employ a co-extrusion method for lamination during melt extrusion. This is a method in which resins, which are raw materials for the respective layers, are each melt-extruded by separate extruders, and joined using a feed block or the like in the middle of the resin flow path.

As a method for melt extruding a resin raw material, known methods may be used, and methods using an extruder equipped with a barrel and a screw are preferred. It is preferred that a hopper dryer, a paddle dryer, or other such dryer, or a vacuum dryer is used in advance to cause a raw material (polyester or polyamide or the like) that decomposes due to the effect of moisture when molten to be dried until the moisture content thereof is 100 ppm or less, more preferably 90 ppm or less, and still more preferably 80 ppm or less. After the raw material is dried in such fashion, the resin melted by an extruder is quenched, as a result of which it is possible to obtain an unstretched film. Extrusion may be carried out by adopting a T die method, a tubular method, and any other such known method.

By thereafter quenching the film that is molten due to the extrusion, it is possible to obtain an unstretched film. As a method for quenching a molten resin, a method in which the molten resin from an orifice fixture is cast onto a rotating drum where the resin is quenched and allowed to solidify to obtain a substantially unoriented resin sheet may be favorably adopted.

The film serving as a laser-printed layer may be formed by any technique of unstretching; uniaxial stretching (stretching in at least one of the vertical (machine) direction or the horizontal (transverse) direction); biaxial stretching. However, in consideration of mechanical strength, uniaxial stretching is preferred, and biaxial stretching is more preferred. Similarly, the substrate layer is also preferably uniaxially stretched, and more preferably biaxially stretched. However, the seal layer is preferably unstretched for achievement of sealing strength. By forming a stretched film, it is possible to prevent a decrease in mechanical strength due to the use of a laser-printed pigment and to improve abrasion resistance.

While the description that follows is given with a focus on the sequential biaxial stretching method employing machine direction stretching - transverse direction stretching in which stretching is first carried out in the machine direction and stretching is subsequently carried out in the transverse direction, there is no objection to transverse direction stretching - machine direction stretching in which the order is reversed, as this merely causes a change in the principal orientation direction. There would moreover be no objection to a simultaneous biaxial stretching method in which stretching in the machine direction and stretching in the transverse direction are simultaneously carried out.

### 3.1.3. First (machine direction) stretching

Stretching in a first direction (vertical or machine direction) may be carried out by causing the film to be fed into a machine direction stretching device in which a plurality of groups of rolls are arranged in continuous fashion. In carrying out machine direction stretching, it is preferred that a preheating roll is used to carry out preheating of the film. The preheating temperature is set so as to be between a glass transition temperature Tg and a melting point Tm + 50°C, as determined based on the Tg of the plastic constituting the film. When the preheating temperature is less than Tg, stretching is difficult when stretching in the machine direction is carried out, and fracture is apt to occur, which is not preferred. When the heating temperature is higher than Tm + 50°C, the film is apt to stick to the roll and the film is apt to be wound around the roll, which is not preferred.

When the film reaches between Tg and Tm + 50°C, stretching in the machine direction is carried out. The stretching ratio in the machine direction should be 1x or more and 5x or less. As 1x means that there is no stretching in the machine direction, the stretching ratio in the machine direction is 1x to obtain a film which is uniaxially stretched in the transverse direction, and the stretching ratio in the machine direction is 1.1x or more to obtain a biaxially stretched film. By setting the machine direction stretching ratio to be 1.1x or more, a void is formed within the printed layer, which is preferred. There is no objection to employment of any value as the upper limit of the stretching ratio in the machine direction, but when a stretching ratio in the machine direction is too great, fracture is apt to occur during the stretching in the transverse direction that follows, and therefore it is preferred that the stretching ratio in the machine direction is 10x or less. The stretching ratio in the machine direction is more preferably 1.2x or more and 9.8x or less, and still more preferably 1.4x or more and 9.6x or less.

### 3.1.4. Second (transverse direction) stretching

Following the first (machine direction) stretching, it is preferred that stretching in the transverse direction is carried out at a stretching ratio of the order of 2x to 13x at between Tg and Tm + 50°C in a state where the two ends in the transverse direction (the direction perpendicular to the machine direction) of the film are gripped by clips within a tenter. Before carrying out stretching in the transverse direction, it is preferred that preheating is carried out, and preheating may be carried out until the temperature at the display material or the adhesive laminate surface reaches between Tg and Tm + 50°C.

The stretching ratio in the transverse direction is more preferably 2.2x or more and 12.8x or less, and still more preferably 2.4x or more and 12.6x or less. Since the stretching rates are different for stretching in the machine direction and stretching in the transverse direction (the stretching rate is higher for stretching in the machine direction), the preferred stretching ratio ranges are different. It is preferred that the area ratio which is the product of the machine direction stretching and transverse direction stretching ratios is 2.2x or more and 64x.

Following the stretching in the transverse direction, it is preferred that the film is made to pass through an intermediate zone in which no active heating procedure is performed. Relative to the zone in which the stretching in the transverse direction is carried out at the tenter, the temperature at the final heat treatment zone that follows is high, and therefore failure to establish an intermediate zone causes heat (hot air itself and radiated heat) from the final heat treatment zone to flow into the process at which the stretching in the transverse direction is carried out. In this case, the temperature in the zone in which the stretching in the transverse direction is carried out is not stable, and therefore variation in physical properties occurs. It is therefore preferred that following stretching in the transverse direction, the film is made to pass through an intermediate zone until a prescribed time has elapsed before final heat treatment is performed. It is important that when in this intermediate zone, rectangular strips are made to hang down from above while the film is kept from passing therethrough, hot air from the final heat treatment zone and from the zone in which the stretching in the transverse direction is carried out as well as any concomitant flow that accompanies the movement of the film is blocked, so that the strips are made to hang down from above in almost perfectly vertical fashion. It is sufficient if the time of passage through the intermediate zone is on the order of 1 second to 5 seconds. When the time is less than 1 second, the length of time in the intermediate zone is insufficient, resulting in an inadequate heat blocking effect. Meanwhile, a time in the intermediate zone is preferably longer, but when the time therein is too long, an equipment size increases, and therefore the order of 5 seconds is sufficient.

### 3.1.5. Heat treatment

Following passage through the intermediate zone, it is preferred at the heat treatment zone that heat treatment is carried out at between 100°C and 280°C. Since the heat treatment promotes the crystallization of the film, a heat shrinkage rate occurring during a stretching process can be reduced, and tensile fracture strength is likely to increase. When the heat treatment temperature is less than 100°C, the heat shrinkage rate of the film is apt to increase, which is not preferred. Meanwhile, when the heat treatment temperature exceeds 280°C, the film is apt to melt, and tensile fracture strength is apt to be reduced, which is not preferred. The heat treatment temperature is more preferably between 110°C and 270°C, and still more preferably between 120°C and 260°C.

It is preferred that the time of passage through the heat treatment zone is 2 seconds or more and 20 seconds or less. When the time of passage therethrough is 2 seconds or less, the film passes through the heat treatment zone without the surface temperature of the film reaching a set temperature, and therefore the heat treatment is meaningless. The longer the time of passage therethrough is, the greater the effect of the heat treatment is, and therefore it is more preferred that the time is 5 seconds or more. However, attempting to increase the length of time of passage therethrough results in an increased equipment size, and therefore as a practical matter, the time is sufficient if the time is 20 seconds or less.

During the heat treatment, decreasing the distance between tenter clips (relaxation in the transverse direction) by an optional ratio makes it possible to reduce a heat shrinkage rate in the transverse direction. For this reason, it is preferred during the final heat treatment that the film is made to undergo relaxation in the transverse direction within the range 0% or more and 10% or less (a relaxation rate of 0% indicating that the film is not made to undergo relaxation). Whereas the higher the relaxation rate in the transverse direction is, the greater the reduction in the shrinkage rate in the transverse direction is, the upper limit of the relaxation rate (shrinkage rate of the film in the transverse direction immediately following the stretching in the transverse direction) is determined by the raw materials used, the conditions under which the stretching in the transverse direction is carried out, and the heat treatment temperature, and therefore it is not possible to cause the film to undergo relaxation to the point where the upper limit of the relaxation rate is exceeded. At a laser-printed layer constituting a display material in accordance with the present invention, the upper limit of the relaxation rate in the transverse direction is 10%. During the heat treatment, it is also possible to decrease the distance between clips in the machine direction by an optional ratio (relaxation in the machine direction).

### 3.1.6. Cooling

Following passage through the heat treatment zone, it is preferred at the cooling zone that a cooling airstream at 10°C or more and 50°C or less is used to cool the film for a passage time therethrough of 2 seconds or more and 20 seconds or less.

By thereafter causing the film to be rolled up as portions cut from the two ends thereof are removed therefrom, a film roll is obtained.

### 3.2. Pressure-sensitive adhesive layer

The pressure-sensitive adhesive layer that can constitute the adhesive laminate of the present invention can be obtained by melt-extruding the raw materials listed in the above "1.3. Pressure-sensitive adhesive layer" in the same manner as that described in the above "3.1.1. Mixing and supply of raw materials" and "3.1.2. Melt extrusion" to form an unstretched film. The pressure-sensitive adhesive layer may be formed alone, and then laminated on the laser-printed layer in the following "3.2. Laminate", or a resin to be the pressure-sensitive adhesive layer may be melt-extruded from a slot die and laminated on the laser-printed layer in an optional step up to winding of the laser-printed layer described in the above "3.1. Laser-printed layer, substrate layer". When the latter lamination method is employed, it is preferred that the pressure-sensitive adhesive layer is unstretched in order to develop an adhesive strength, and therefore it is preferred that the pressure-sensitive adhesive layer is laminated in a step after the stretching of the laser-printed layer or the substrate layer is completed.

### 3.3. Release layer

The method for forming the release layer that can be preferably provided in the present invention is not particularly limited, and in the case of providing the sea-island structure as described in the above "1.6. Release layer", the sea-island structure can be obtained by, for example, melt-extruding resins of sea and island components.

When a resin incompatible (releasable) with the pressure-sensitive adhesive layer is provided, a method is used, in which a coating solution obtained by dissolving or dispersing a releasable resin is developed on one surface of the substrate film by coating or the like, and a solvent or the like is removed by drying, and then heat-dried, thermally cured, or ultraviolet cured.

### 3.4. Lamination

When the adhesive laminate of the present invention is produced, in a case where the laser-printed layer, the pressure-sensitive adhesive layer, the substrate layer, and other layers (including a gas barrier layer, an anchor coat layer and an overcoat layer that are laminated on any layer, if necessary) are separately formed by the methods described in the "3.1. Film production conditions" and then laminated, the lamination method is not particularly limited, and adjacent layers can be laminated by conventionally known dry lamination or extrusion lamination using laminating agents such as those described in the "1.4. Laminating agent". In order to laminate the laser-printed layer, the pressure-sensitive adhesive layer, the substrate later, and other layers in the present invention, there is a method in which a laminating agent is applied to one of the layers, the other layer is then bonded to the coated surface, and drying is performed to volatilize the solvent. The drying conditions vary depending on the laminating agent, but the laminating agent is cured by, for example, being left to stand in an environment of 40°C for one day or longer.

### 3.5. Gas barrier layer

The method for forming the gas barrier layer is not particularly limited, and known manufacturing methods can be employed as long as the object of the present invention is not impaired. Among known manufacturing methods, it is preferred to employ a vapor-deposition method. Examples of the vapor-deposition method include a vacuum vapor-deposition method, a sputtering method, a PVD (physical vapor-deposition) method such as ion plating, and a CVD (chemical vapor-deposition) method. Among these, the vacuum vapor-deposition method and the physical vapor-deposition method are preferred, and the vacuum vapor-deposition method is particularly preferred from the viewpoint of a production speed and stability. As a heating mode in the vacuum deposition method, resistance heating, high-frequency induction heating, or electron beam heating or the like can be used. Oxygen, nitrogen, or water vapor or the like may be introduced as a reactive gas, or reactive vapor-deposition using means such as ozone addition or ion assist may be used. The film forming conditions may be changed, such as applying a bias to the substrate, raising the temperature of the substrate, or cooling the substrate, as long as the object of the present invention is not impaired.

Here, a method for forming a gas barrier layer by a vacuum deposition method will be described. When a gas barrier layer is formed, the adhesive laminate of the present invention is conveyed to a gas barrier layer manufacturing apparatus via a metal roll. As an example of the configuration of the gas barrier layer manufacturing apparatus, the apparatus includes an unwinding roll, a coating drum, a winding roll, an electron beam gun, a crucible, and a vacuum pump. The adhesive laminate is set on the unwinding roll, passes through the coating drum, and is wound around the winding roll. The pressure in the pass line of the adhesive laminate (inside the gas barrier layer manufacturing apparatus) is reduced by the vacuum pump, and an inorganic material set in the crucible is vaporized by a beam emitted from the electron gun and deposited onto the adhesive laminate that passes through the coating drum. During the deposition of an inorganic material, the adhesive laminate is subjected to heat and tension between the unwinding roll and the winding roll. When the temperature applied to the adhesive laminate is too high, the adhesive laminate undergoes not only great heat shrinkage but also softening, and thus elongation deformation due to tension is apt to occur. Moreover, the temperature drop (cooling) of the adhesive laminate after the vapor-deposition process is large, the amount of shrinkage after expansion (different from heat shrinkage) is large, the gas barrier layer cracks, and the desired gas barrier properties are less likely to be exerted, which is not preferred. Meanwhile, as the temperature applied to the adhesive laminate is lower, the deformation of the adhesive laminate is suppressed, which is preferred, but the amount of an inorganic material vaporized decreases, resulting in a decrease in the thickness of the gas barrier layer, and therefore there is a concern that the desired gas barrier properties are not achieved. The temperature applied to the adhesive laminate is preferably 100°C or more and 180°C or less, more preferably 110°C or more and 170°C or less, and still more preferably 120°C or more and 160°C or less.

In a case where an aluminum foil is bonded as an opaque gas barrier layer, the aluminum foil can be bonded by the method mentioned in the "1.4. Adhesive layer".

### 3.6. Overcoat layer

When an overcoat layer is formed, the adhesive laminate is conveyed to the coating equipment via a metal roll. Examples of an equipment configuration include an unwinding roll, a coating process, a drying process, and a winding process. At the time of overcoating, the adhesive laminate set on the unwinding roll is subjected to the coating process and the drying process via the metal roll and finally led to the winding roll. The coating method is not particularly limited, and conventionally known methods, such as a gravure coating method, a reverse coating method, a dipping method, a low coating method, an air knife coating method, a comma coating method, a screen printing method, a spray coating method, a gravure offset method, a die coating method, and a bar coating method, can be employed, and the coating method can be appropriately selected according to the desired purpose. Among these, a gravure coating method, a reverse coating method, and a bar coating method are preferred from the viewpoint of productivity. As the drying method, one heating method or a combination of two or more heating methods, such as hot air drying, hot roll drying, high frequency irradiation, infrared irradiation, and UV irradiation, can be used.

In the drying process, the adhesive laminate is heated and also subjected to tension between the metal rolls. When the temperature at which the adhesive laminate is heated in the drying process is too high, the adhesive laminate undergoes not only great heat shrinkage but also softening, and therefore elongation deformation due to tension is apt to occur, and the gas barrier layer of the adhesive laminate is apt to crack. Moreover, the temperature drop (cooling) of the adhesive laminate after the drying process is large, accordingly the amount of shrinkage after expansion (different from heat shrinkage) is large, the gas barrier layer and the overcoat layer crack, and the desired gas barrier properties are less likely to be achieved, which is not preferred. Meanwhile, as the temperature at which the adhesive laminate is heated is lower, the deformation of the adhesive laminate is suppressed, which is preferred, but the solvent of the coating liquid is less likely to be dried, and therefore there is a concern that the desired gas barrier properties are not achieved. The temperature at which the adhesive laminate is heated is preferably 60°C or more and 200°C or less, more preferably 80°C or more and 180°C or less, and still more preferably 100°C or more and 160°C or less.

### 3.7. Laser-printed layer

Examples of types (wavelengths) of lasers that may be used to carry out laser printing on the adhesive laminate of the present invention include CO2 lasers (10600 nm), YAG lasers (1064 nm), YVO₄ lasers (1064 nm), fiber lasers (1064 nm and 1090 nm), green lasers (532 nm), and UV lasers (355 nm). Among these, while there is no particular limitation with respect to the type of laser used at printing of the present invention, and CO2 lasers are often used for ablation of plastic. As the CO2 lasers are often used for a purpose that is different from printing which is the intention of the present invention, the CO2 lasers are not preferred as a laser source. As the laser source, YAG lasers, YVO₄ lasers, fiber lasers, green lasers, and UV lasers are preferred, and YAG lasers, fiber lasers, and UV lasers are more preferred. Commercially available devices may be used for laser printing, and representative examples thereof include LM-2550 (YAG laser) manufactured by Brother Industrial Printing, Ltd.; MX-Z2000H-V1 (fiber laser) manufactured by Omron Corporation; 8028 Trotec Speedy 100 flexx (fiber laser) manufactured by Trotec; MD-X1000 (YVO4 laser), and MD-U1000C (UV laser) manufactured by Keyence Corporation.

Regarding laser printing conditions, while specifications and conditions that may be established will differ for each device manufacturer and for each model, and will moreover differ depending on the film on which printing is carried out, for which reason it is impossible to speak to every situation, the following will apply where MD-U1000C (UV laser; wavelength 355 nm) manufactured by Keyence Corporation is employed by way of example.

It is preferred that laser power is such that output is 20% or more and 80% or less of the maximum 13 W specified for the device. When the output is less than 20%, printing density is reduced, and visual perceivability is reduced, which is not preferred, When the output is 80% or more, perforation occurs in the display body, which is not preferred. The output is more preferably 25% or more and 75% or less, and still more preferably 30% or more and 70% or less. It is preferred that a pulse frequency is 10 kHz or more and 100 kHz or less. When the frequency falls below 10 kHz, laser energy per irradiation is high, and the decrease rate of the thickness at the printed portion is apt to exceed 80 vol%, which is not preferred. Conversely, when the frequency exceeds 100 kHz, the decrease rate of the thickness at the printed portion is apt to be 80 vol% or less, but it may be difficult to set a difference between color L* values at the printed portion to 1 or more. The frequency is more preferably 15 kHz or more and 95 kHz or less, and still more preferably 20 kHz or more and 90 kHz or less. It is preferred that a scan speed is

10 mm/sec or more and 3000 mm/sec or less. When the scan speed falls below 10 mm/sec, a printing speed is extremely low, and therefore the production rate of the display body is reduced, which is not preferred. Meanwhile, when the scan speed exceeds 3000 mm/sec, the printing density is reduced, and a difference between color L* values is less likely to be set to 1 or more, which is not preferred. The scan speed is more preferably 100 mm/sec or more and 2900 mm/ or less, and still more preferably 200 mm/sec or more and 2800 mm/ or less.

The timing of performing laser printing on the adhesive laminate of the present invention is not particularly limited, and may be either before or after bonding (thermally forming) with an adherend.

### 4. Application

The laser-printed adhesive laminate of the present invention can be suitably used as a display material for various articles such as foods, pharmaceuticals, and industrial products. The present invention has adhesiveness, and therefore the present invention is preferably used as an application for attaching a tack label or the like. The adhesive laminate is roughly classified into a type in which the adhesive laminate is stuck to an adherend and then repeatedly stuck and peeled off, and a type in which the adhesive laminate is not peeled off (semi-permanently). These types can be distinguished by adjusting the adhesive strength of the pressure-sensitive adhesive layer.

The adhesive laminate of the present invention can be preferably used not only as the display material as described above but also as a security label that can be easily recognized as being peeled off when being peeled off from the adherend. In order to develop such a security function, an irreversible change is required after peeling from the adherend. For example, there is a mechanism in which a printed layer on which characters and patterns other than printed characters and patterns formed by laser are described remains on the adherend, or the adhesive laminate is broken. In the former case, by providing a layer having weak ink adhesion inside the pressure-sensitive adhesive layer, the ink remains on the adherend after the adhesive laminate is peeled off. In the latter case, when the tensile fracture elongation of the substrate layer is 10% or less, easy fracture properties can be developed.

### EXAMPLES

Next, although the present invention is specifically described by way of Examples and Comparative Examples, the present invention is not limited to the aspects of these Examples at all, and can be appropriately modified without departing from the gist of the present invention.

### <Polyolefin raw materials>

### <Polyolefin A>

As Polyolefin A, FS2011DG3 manufactured by Sumitomo Chemical Co., Ltd., was used.

### <Polyolefin B>

As Polyolefin B, FS7053G3 manufactured by Sumitomo Chemical Co., Ltd., was used.

### <Polyolefin C>

60% by mass of CaCO3 was kneaded into Polyolefin A to obtain Polyolefin C.

### <Polyolefin D>

60% by mass of TiO₂ was kneaded into Polyolefin A to obtain Polyolefin D.

### <Polyester raw materials>

### [Polyester A]

As Polyester A, RE553 manufactured by Toyobo Co., Ltd., was used.

### [Polyester B]

As Polyester B, 50% by mass of TiO₂ was kneaded into Polyester A to obtain Polyester B.

### [Polyester C]

As Polyester C, Polyester A and "Tomatec Color 42-920A (primary constituent Bi₂O₃)" laser pigment (manufactured by Tokan Material Technology Co., Ltd.) were mixed (dry blended) at a mass ratio of 95 : 5, and the mixture was fed into a screw-type extruder, where the mixture was heated at 275°C and melt blended. This molten resin was expelled with a cylindrical shape in continuous fashion from a strand die, and the expelled product was cut at a strand cutter to obtain chip-like Polyester C (masterbatch).

### [Polyester D]

As Polyester D, RE555 (masterbatch into which 7000 ppm of SiO2 was kneaded) manufactured by Toyobo Co., Ltd., was used.

Respective polyolefin raw material and polyester raw material compositions are shown in Table 1.

**[Table 1]**

| Name of raw material | Resin type | Laser-printed pigment | |
|---|---|---|---|
| | | Type | Amount added |
| Polyolefin A | Polypropylene | None | - |
| Polyolefin B | Propylene-ethylene copolymer | None | - |
| Polyolefin C | Polypropylene | CaCO₃ | 60 wt% |
| Polyolefin D | Polypropylene | TiO₂ | 60 wt% |
| Polyolefin E | Polymethylpentene 70 wt%/polystyrene 30 wt% | None | - |
| Polyester A | Polyethylene terephthalate | None | - |
| Polyester B | Polyethylene terephthalate | TiO₂ | 50 wt% |
| Polyester C | Polyethylene terephthalate | Bi₂O₃ | 5 wt% |
| Polyester D | Polyethylene terephthalate | SiO₂ | 7000 ppm |

### [Film 1]

Polyolefin A, Polyolefin C, and Polyolefin D were mixed at a mass ratio of 35 : 50 : 15 as a raw material for Layer A; Polyolefin A, Polyolefin B, and Polyolefin C were mixed at a mass ratio of 10 : 70 : 20 as a raw material for Layer B.

The raw materials mixed for Layer A and Layer B were respectively fed into different screw-type extruders, melted, and extruded from a T die. A feedblock was used partway along the flow paths of the respective molten resins so as to cause the molten resins to be joined, and this was expelled from a T die and taken up at a draft ratio of 1.2 as it was cooled on a chill roll, the surface temperature of which was set to 30°C, to obtain an unstretched laminated film. Molten resin flow paths were established so as to cause the laminated film to be such that the central layer thereof was Layer A, and the two surfacemost layers thereof were Layer B (i.e., a B/A/B constitution in which there were three layers of two types), and the amounts expelled therefrom were adjusted so as to cause the thickness ratio of Layer A and Layer B to be 90/10 (B/A/B = 5/90/5).

The cooled and solidified unstretched laminated film was guided to a machine direction stretching device in which a plurality of groups of rolls were arranged in continuous fashion, and the laminated film was made to undergo preheating on preheating rolls until the film temperature reached 125°C, followed by stretching by a factor of 4x.

Following machine direction stretching, the film was guided to a transverse direction stretching device (tenter), where the film was made to undergo preheating for 8 seconds until the surface temperature thereof reached 160°C, followed by stretching by a factor of 9.8x in the transverse direction (horizontal direction). Following transverse direction stretching, the film was guided while still in that state to an intermediate zone, and was made to pass therethrough in 1.0 second. In the intermediate zone of the tenter, when rectangular strips were made to hang down from above while the film was kept from passing therethrough, hot air from the heat treatment zone and hot air from the zone in which stretching in the transverse direction was carried out were blocked, so that the strips were made to hang down from above in almost perfectly vertical fashion.

Thereafter, following passage through the intermediate zone, the film was guided to the heat treatment zone, where heat treatment was carried out for 9 seconds at 165°C. At this time, at the same time that heat treatment was carried out, the distance between clips in the transverse direction of the film was reduced, causing the film to undergo 3% relaxation treatment in the transverse direction. Following passage through the final heat treatment zone, the film was cooled for 5 seconds in a cooling airstream at 30°C. Portions were cut and removed from the two edges thereof and this was rolled up into a roll 400 mm in width to continuously manufacture a prescribed length of a biaxially stretched film having a thickness 70 um. The properties of the obtained film were evaluated in accordance with the foregoing methods. The manufacturing conditions are shown in Table 2.

### [Films 2 to 4]

In similar fashion as at Film 1, various conditions were altered to continuously form films at Films 2 to 4. The manufacturing conditions for the respective films are shown in Table 2.

**[Table 2]**

| | | Film 1 | Film 2 | Film 3 | Film 4 |
|---|---|---|---|---|---|
| Raw material composition of layer A [% by mass] | Polyolefin A | 35 | 50 | 0 | 0 |
| | Polyolefin B | 0 | 0 | 0 | 0 |
| | Polyolefin C | 50 | 25 | 0 | 0 |
| | Polyolefin D | 15 | 25 | 0 | 0 |
| | Polyolefin E | 0 | 0 | 7 | 0 |
| | Polyester A | 0 | 0 | 88 | 90 |
| | Polyester B | 0 | 0 | 3 | 0 |
| | Polyester C | 0 | 0 | 0 | 3 |
| | Polyester D | 0 | 0 | 0 | 7 |
| Raw material composition of layer B [% by mass] | Polyolefin A | 10 | 30 | 0 | - |
| | Polyolefin B | 70 | 70 | 0 | - |
| | Polyolefin C | 20 | 0 | 0 | - |
| | Polyolefin D | 0 | 0 | 0 | - |
| | Polyolefin E | 0 | 0 | 0 | - |
| | Polyester A | 0 | 0 | 60 | - |
| | Polyester B | 0 | 0 | 30 | - |
| | Polyester C | 0 | 0 | 0 | - |
| | Polyester D | 0 | 0 | 10 | - |
| Laser pigment of layer A | Type | TiO₂/CaCO₃ | TiO₂/CaCO₃ | TiO₂ | Bi₂O₃ |
| | Amount added [wt%] | 9.0/30 | 15/15 | 2.5 | 0.15 |
| Laser pigment of layer B | Type | CaCO₃ | None | TiO₂ | - |
| | Amount added [wt%] | 12 | - | 15 | - |
| Layer configuration | | B/A/B | B/A/B | B/A/B | A |
| Thickness ratio among respective layers [vol%] | | 5/90/5 | 20/60/20 | 25/50/25 | 100 |
| Stretching in machine direction (machine direction stretching) | Temperature for stretching [°C] | 125 | 120 | 90 | 90 |
| | Stretching ratio | 4.0 | 4.7 | 3.1 | 3.5 |
| Stretching in transverse direction (transverse direction stretching) | Temperature for stretching [°C] | 160 | 145 | 125 | 105 |
| | Stretching ratio | 9.8 | 10.1 | 4.2 | 3.8 |
| Heat treatment | Temperature [°C] | 165 | 160 | 230 | 230 |
| | Relaxation rate (transverse direction) [%] | 3 | 8 | 6 | 3 |
| Film thickness [µm] | | 70 | 35 | 100 | 50 |

### [Pressure-sensitive adhesive layer 1]

76.6% by mass of a polyurethane resin (Resamine UD8300LP manufactured by Dainichiseika Color & Chemicals Mfg. Co., Ltd., nonvolatile content: 50% by weight), 23% by mass of a polyisocyanate-based crosslinking agent (Resamine NE manufactured by Dainichiseika Colour & Chemicals Mfg. Co., Ltd., nonvolatile content: 75% by weight), and 0.4% by mass of an amine-tin-based crosslinking accelerator (Resamine HI215 accelerator manufactured by Dainichiseika Color & Chemicals Mfg. Co., Ltd., nonvolatile content: 5% by weight) were mixed to prepare a polyurethane-based solution for film coating.

### [Pressure-sensitive adhesive layer 2]

31% by mass of an alicyclic epoxy resin (Celloxide 2021 manufactured by Daicel Chemical Industries, Ltd.), 36% by mass of trimethylolpropane divinyl ether, 31% by mass of 1,4 butanediol monovinyl ether, and 2% by mass of triphenylsulfonylhexafluoroantimonic acid were mixed to prepare an epoxy-based solution.

### [Pressure-sensitive adhesive layer 3]

32% by mass of an acrylic prepolymer (Beam Set 243NS manufactured by Arakawa Chemical Industries, Ltd.), 30% by mass of polyethylene glycol acrylate, 30% by mass of polyethylene glycol diacrylate, 5% by mass of 2-hydroxy-2-methyl-1-phenyl-1-propanone, and 3% by mass of carbon black were mixed to prepare a black acrylic solution.

### [Pressure-sensitive adhesive layer 4]

40% by mass of a styrene-based elastomer (Tuftec H1221 manufactured by Asahi Kasei Chemicals Corporation, styrene component ratio: 12% by mass, ethylene component ratio: 18% by mass, 230°CMFR: 4.5 g/10 min), 50% by mass of an ethylene-α-olefin copolymer (CX3007 manufactured by Sumitomo Chemical Co., Ltd., 190°CMFR: 3.7 g/10 min, flexural modulus: 26 MPa), and 10% by mass of a petroleum resin (ARKON P125 manufactured by Arakawa Chemical Industries, Ltd.) were mixed and melt-extruded at 210°C with a single screw extruder to obtain a sheet having a thickness of 20 um.

### [Release layer 1]

100 parts by mass of a thermosetting type aminoalkyd resin (Tesfine 314 manufactured by Hitachi Chemical Co., Ltd., solid content: 60% by mass) and 1.2 parts by mass of p-toluenesulfonic acid (Dryer 900 manufactured by Hitachi Chemical Co., Ltd., solid content: 50% by mass) as a curing catalyst were diluted with a toluene/methyl ethyl ketone/heptane (= 3 : 5 : 2) solution to prepare a release agent solution having a solid content of 2% by mass.

### [Release layer 2]

100 parts by mass of a UV curing type silicone resin (UV9300 manufactured by Momentive Performance Materials Inc., solid content concentration: 100% by mass) and 1 part by mass of a curing catalyst bis(alkylphenyl)iodonium hexafluoroantimonate were diluted with a toluene/methyl ethyl ketone/heptane (= 3 : 5 : 2) solution to prepare a release agent solution having a solid content of 2% by mass.

### [Release layer 3]

90% by mass of a propylene-ethylene block copolymer (BC3HF manufactured by Japan Polypropylene Corporation) and 10% by mass of a low density polyethylene resin (R300 manufactured by Ube Industries, Ltd.) were melt-extruded at 250°C with a 65 mmϕ single screw extruder to obtain a release layer.

### [Example 1]

A pressure-sensitive adhesive layer 1 was applied onto one surface of a film 1 so that the thickness of the pressure-sensitive adhesive layer 1 after drying was 12 um, and dried. A release layer 1 was then applied onto the opposite surface so that the thickness of the release layer 1 after drying was 0.1 um, and dried to obtain an adhesive laminate with a release layer.

The obtained adhesive laminate was cut into 150 mm square, and "12345ABCDE" was printed in the center thereof at a pulse frequency of 40 kHz, a scanning speed of 2000 mm/min, and an output of 30% using a UV laser with a wavelength of 355 nm (Laser Marker MD-U1000C manufactured by Keyence Corporation). The size per character was approximately 5 mm in height × approximately 3 mm in width.

The layer configuration and physical property evaluation results for the obtained adhesive laminate are shown in Table 3.

### [Example 2]

A pressure-sensitive adhesive layer 1 was applied onto one surface of a film 2 so that the thickness of the pressure-sensitive adhesive layer 1 after drying was 12 um, and dried to obtain an adhesive laminate.

Next, an aluminum oxide (Al₂O₃) thin film was formed as a gas barrier layer on one surface of a biaxially stretched polyethylene terephthalate film, Ester film (registered trademark) E5102-12 um manufactured by Toyobo Co., Ltd. by a vacuum vapor-deposition method while introducing oxygen gas with a vacuum vapor-deposition machine using aluminum as a vapor-deposition source. The thickness of the gas barrier layer was 10 nm.

Thereafter, a release layer 2 was applied onto the surface opposite to the surface provided with the gas barrier layer of E5102-12 um so that the thickness of the release layer 2 after drying was 0.1 um, and dried.

The adhesive laminate and the gas barrier film with the release layer were bonded to each other by a dry lamination method using a urethane-based two-component curable adhesive ("Takelac (registered trademark) A525S" and "Takenate (registered trademark) A50" manufactured by Mitsui Chemicals, Inc. were blended at a weight ratio of 13.5 : 1), followed by aging at 40°C for 4 days to obtain the adhesive laminate having gas barrier properties and release properties. When the E5100-12 um is bonded, the release layer was on the surface layer side (outer side), and the gas barrier layer was on the central layer side (inner side).

The obtained adhesive laminate was cut into 150 mm square, and "12345ABCDE" was printed in the center thereof at a pulse frequency of 30 kHz, a scanning speed of 1500 mm/min, and an output of 80% using a fiber laser with a wavelength of 1064 nm (Laser Marker 8028 Trotec Speedy 100 flexx manufactured by Trotec). The size per character was approximately 8 mm in height × approximately 5 mm in width.

The layer configuration and physical property evaluation results for the obtained adhesive laminate are shown in Table 3.

### [Example 3]

The entire surface of a biaxially stretched polyethylene terephthalate film, Ester film (registered trademark) E5102-12 um manufactured by Toyobo Co., Ltd., was coated with a pressure-sensitive adhesive layer 2, and the pressure-sensitive adhesive layer 2 was cured by irradiation with ultraviolet rays. The thickness of the pressure-sensitive adhesive layer 2 after curing was 10 um. Next, a black acrylic solution for a pressure-sensitive adhesive layer 3 was laminated through a silk screen from above the pressure-sensitive adhesive layer 2 so as to form character shapes such as "aiueo", and then irradiated with ultraviolet rays to be cured, thereby preparing an adhesive laminate including the pressure-sensitive adhesive layers 2 and 3.

Next, the release layer 2 was applied onto one surface of the film 3 so that the thickness of the release layer 2 after drying was 0.1 um, and dried.

A surface of the adhesive laminate onto which the pressure-sensitive adhesive layer was not applied was bonded to the film 3 by a dry lamination method using a urethane-based two-component curable adhesive ("Takelac (registered trademark) A525S" and "Takenate (registered trademark) A50" manufactured by Mitsui Chemicals, Inc. were blended at a weight ratio of 13.5 : 1), followed by aging at 40°C for 4 days to obtain an adhesive laminate having a security function. During bonding, the release layer of the film 3 was the outermost layer (outer side).

The obtained adhesive laminate having a security function was cut into 150 mm square, and "12345ABCDE" was printed in the center thereof at a pulse frequency of 40 kHz, a scanning speed of 2000 mm/min, and an output of 30% using a UV laser with a wavelength of 355 nm (Laser Marker MD-U1000C manufactured by Keyence Corporation). The size per character was approximately 1 mm in height × approximately 1 mm in width.

The layer configuration and physical property evaluation results of the obtained adhesive laminate having a security function are shown in Table 3.

### [Example 4]

A release layer 2 was applied onto one surface of a film 4 so that the thickness of the release layer 2 after drying was 0.1 um, and dried.

The film 4 with the release layer and the pressure-sensitive adhesive layer 4 were bonded to each other by dry lamination using a urethane-based two liquid curing adhesive ("TAKELAC (registered trademark) A525S" and "TAKENATE (registered trademark) A50" manufactured by Mitsui Chemicals, Inc. were blended at a weight ratio of 13.5 : 1), followed by aging at 40°C for 4 days to obtain an adhesive laminate. During bonding, the release layer of the film 4 was the outermost layer (outer side), and the pressure-sensitive adhesive layer 4 was the opposite surface (inner side).

The obtained adhesive laminate was cut into 150 mm square, and "12345ABCDE" was printed in the center thereof at a pulse frequency of 45 kHz, a scanning speed of 800 mm/min, and an output of 30% using a fiber laser with a wavelength of 1064 nm (Laser Marker 8028 Trotec Speedy 100 flexx manufactured by Trotec). The size per character was approximately 7 mm in height × approximately 7 mm in width.

The layer configuration and physical property evaluation results for the obtained adhesive laminate are shown in Table 3.

### [Comparative Example 1]

A pressure-sensitive adhesive layer 4 was cut into 150 mm square, and "12345ABCDE" was printed in the center thereof at a pulse frequency of 40 kHz, a scanning speed of 2000 mm/min, and an output of 30% using UV laser with a wavelength of 355 nm (Laser Marker MD-U1000C manufactured by Keyence Corporation). The size (setting) per character was about 5 mm in height × about 3 mm in width.

The layer configuration and physical property evaluation results of the obtained adhesive single layer film are shown in Table 3.

### [Comparative Example 2]

A pressure-sensitive adhesive layer 1 was applied onto one surface of a film 1 so that the thickness of the pressure-sensitive adhesive layer 1 after drying was 12 um, and dried. A release layer 1 was then applied onto the opposite surface so that the thickness of the release layer 1 after drying was 0.1 um, and dried to obtain an adhesive laminate with a release layer.

The obtained adhesive laminate was cut into 180 mm square, and "B" was printed in the center thereof at a pulse frequency of 30 kHz, a scanning speed of 400 mm/min, and an output of 80% using a fiber laser with a wavelength of 1064 nm (Laser Marker 8028 Trotec Speedy 100 flexx manufactured by Trotec). The size per character was approximately 150 mm in height × approximately 150 mm in width.

The layer configuration and physical property evaluation results for the obtained adhesive laminate are shown in Table 3.

### [Comparative Example 3]

A film 1 was cut into 150 mm square, and "12345ABCDE" was printed in the center thereof at a pulse frequency of 40 kHz, a scanning speed of 2000 mm/min, and an output of 30% using a UV laser with a wavelength of 355 nm (Laser Marker MD-U1000C manufactured by Keyence Corporation). The size per character was approximately 5 mm in height × approximately 3 mm in width.

The layer configuration and physical property evaluation results of the obtained adhesive single layer film are shown in Table 3.

### <Method for evaluating adhesive laminate>

The method for evaluating the adhesive laminate is as follows. For samples of the non-printed portion, the samples used were cut out from portions that were 1 mm or more away from any printed portion or sealed portion.

### [Thickness]

A micrometer (Millitron 1254D manufactured by Feinpruf GmbH) was used to measure thicknesses at 5 points in a portion not printed by laser (non-printed portion), and the average value thereof was obtained. When the adhesive laminate was attached to any adherend, the measurement was performed after the adhesive laminate was peeled off.

When it was difficult to peel off the adhesive laminate from the adherend, a sample was cut out together with the adherend, and the thickness of the non-printed portion was measured by microscopically observing the cross section of the sample. Specifically, the sample size was set to 5 mm × 1 mm, and the non-printed portion was cross-sectioned using a microtome. When the sample could not be cross-sectioned because of insufficient rigidity of the sample during cutting with the microtome, Ester film (registered trademark) E5100-100 um manufactured by Toyobo Co., Ltd. was bonded to each of both surface layers of the sample with a two liquid epoxy adhesive (EP001N manufactured by Cemedine Co., Ltd.) to prepare an embedded sample for cross-section observation, and the cross-section of the embedded sample was cut with the microtome. The cross section of the sample was observed using a digital microscope RH-2000 manufactured by Hirox Co., Ltd., and the thickness of the non-printed portion was measured. Software attached to a digital microscope RH-2000 manufactured by Hirox Co., Ltd. was used for the measurement. This operation was repeated three times, and the average value thereof was taken to be the thickness of the non-printed portion.

### [Color L* value (printed portion and non-printed portion)]

A spectroscopic color difference meter (ZE-6000; manufactured by Nippon Denshoku Industries Co., Ltd.) was used in reflection mode to respectively measure the color L* values of the laser-printed portion and the portion not printed by laser (non-printed portion). When the adhesive laminate was attached to any adherend, the measurement was performed after the adhesive laminate was peeled off. When it was difficult to peel off the adhesive laminate from the adherend, the adhesive laminate was cut out together with the adherend to prepare a measurement sample. The specific method used for the measurement of the printed portion was as follows.

A 3 cm square sample was cut out so as to include the entire character "B" among the characters printed as "12345ABCDE", and the measurement was performed. At this time, characters other than "B" may be included, and when the character size exceeds 3 cm, a part of "B" may be included. The light source for measurement at the color difference meter employed a 6ϕ stage (the aperture on which light for measurement fell being approximately 1 cm in diameter) and a 6ϕ eyepiece, and the aperture of the stage was arranged so as to contain the character "B" therewithin. In a case where printing is not completely contained within (i.e., protruded from) the stage aperture, the stage may be changed as necessary (e.g., 10ϕ, 30ϕ, etc.). Even where printing protrudes therefrom, a portion of printing may be contained within the stage aperture so that light for measurement falls thereon.

For the non-printed portion, a square sample which was 3 cm on a side was cut from the portion at which printing had not been carried out, and color L* values were measured using 6ϕ components at the stage and eyepiece of the color difference meter. The stage and eyepiece of the color difference meter may be changed to 10ϕ, 30ϕ, or the like as necessary, in which case an optional sample size may be employed so long as the aperture of the stage is covered (i.e., so long as light for measurement does not leak past the aperture).

### [Print size]

Among the characters printed as "12345ABCDE", a stainless steel straightedge ruler (TZ-RS15 manufactured by Kokuyo Co., Ltd.) was used to measure by visual inspection in increments of 0.5 mm the heights and widths of those at "345ABC", and the average thereof was taken to be the print size. Where the print size was less than 0.5 mm, an RH-2000 digital microscope manufactured by Hirox Co., Ltd. was separately used to measure the print size. Software attached to an RH-2000 digital microscope manufactured by Hirox Co., Ltd. was used for measurement of the print size.

In a case where there is one printing (only "B" or the like), the size of the character was taken to be the print size.

### [Adhesive strength]

Measurement was performed by the following method in accordance with JIS-Z-0237 (2000) Pressure-sensitive adhesive Tape/Pressure-sensitive sheet Test Method.

A test piece was cut out, which had a length of 150 mm in the winding direction (machine direction) of the adhesive laminate and a length of 25 mm in a direction (transverse direction) orthogonal to the winding direction. As a covering body, an acrylic plate (manufactured by Mitsubishi Rayon Co., Ltd.: Acrylite (registered trademark) 3 mm thick) of 50 mm × 150 mm was prepared. The pressure-sensitive adhesive layer of the adhesive laminate was coated so as to be in contact with the acrylic plate, and a rubber roller (coated with a rubber layer having a roller surface spring hardness of 80 Hs and a thickness of 6 mm, and having a width of 45 mm and a diameter (including the rubber layer) of 95 mm) having a mass of 2000 g was reciprocated once at a speed of 5 mm/sec to press-bond the test piece onto the covering body. When the sample after press-bonding was allowed to stand in an environment having a temperature of 23°C and a relative humidity of 65% for 24 hours, and then peeled off at a rate of 300 mm/min by 180 degrees using "Autograph (registered trademark)" (AGS-J) manufactured by Shimadzu Corporation, the maximum resistance value was determined as an adhesive strength [N/25 mm]. Peeling by 180 degrees means that a peeling angle between the acrylic plate and the film when the resistance value during peeling is measured is maintained at 180 degrees.

When the sample cannot be cut out with a length of 150 mm or more in the machine direction due to limitations on the size of the adhesive laminate or the like, the length may be 150 mm or less (for example, 20 mm). In this case, the distance between chucks may be set to 50 mm or less (for example, the distance between chucks is 10 mm in a case where the sample length is 20 mm) as long as the chuck on one side is provided with at least a length of 5 mm or more for gripping the sample. In addition, in a case where cutting to a length of 25 mm cannot be similarly performed in the transverse direction, a length equal to or less than 25 mm (for example, 10 mm or the like) may be used. In this case, the measured adhesive strength is converted into a value per width (transverse direction) of 25 mm.

### [Water vapor transmission rate]

The water vapor transmission rate was measured in conformity with JIS K7126 B method. A water vapor transmission rate measuring apparatus (PERMATRAN-W3/33MG manufactured by MOCON) was used to measure the water vapor transmission rate in a direction in which the moisture-regulating gas permeated from the pressure-sensitive adhesive layer side (inner side) to the outer side of the adhesive laminate in an atmosphere of a temperature of 40°C and a humidity of 90% RH. Before the measurement, the sample was left to stand for 4 hours in an environment having a humidity of 65% RH to condition the humidity.

When the adhesive laminate was attached to any adherend, the measurement was performed after the adhesive laminate was peeled off. When it was difficult to peel off the adhesive laminate from the adherend, the adhesive laminate was cut out together with the adherend to prepare a measurement sample.

### [Oxygen transmission rate]

The oxygen transmission rate was measured in conformity with JIS K7126-2 method. An oxygen transmission amount measuring apparatus (OX-TRAN 2/20 manufactured by MOCOM) was used to measure the oxygen transmission rate in a direction in which oxygen permeated from the pressure-sensitive adhesive layer side (inner side) of the adhesive laminate to the outer side thereof in an atmosphere having a temperature of 23°C and a humidity of 65% RH. Before the measurement, the sample was left to stand for 4 hours in an environment having a humidity of 65% RH to condition the humidity.

When the adhesive laminate was attached to any adherend, the measurement was performed after the adhesive laminate was peeled off. When it was difficult to peel off the adhesive laminate from the adherend, the adhesive laminate was cut out together with the adherend to prepare a measurement sample.

### [Visual evaluation of printed portion]

The visual perceptibility of the characters that were printed on the adhesive laminate was determined based on the following criteria.
Good Characters were recognizable as a result of visual inspection
Poor Characters were unrecognizable as a result of visual inspection

### [Abrasion resistance of printed portion]

A simple abrasion resistance tester (Model IMC-1557, Imoto Machinery Co., LTD) was used to evaluate the abrasion resistance of the laser-printed portion. The adhesive laminate including the laser-printed portion was cut into a size of 150 mm × 150 mm to obtain a measurement sample. The measurement sample was set in the abrasion resistance tester so that the printed portion was in contact with steel wool, and the printed portion was rubbed with the steel wool 50 times at a reciprocating distance of 10 cm and a speed of 15 seconds/10 times. The yarn number of the steel wool was #0000 and a weight was 1 kg.

The printed portion after being rubbed with the steel wool was visually evaluated based on the following criteria.
Good Characters were recognizable as a result of visual inspection (characters were not defaced by friction)
Poor Characters were unrecognizable as a result of visual inspection (characters were defaced by friction)

### [Feeding property of roll]

The feeding property of a film roll having a film width of 300 mm and a winding length of 50 m was evaluated. The feeding property of the roll was evaluated according to the following criteria with the resistance and feeding sound when Ester film (registered trademark) E5100-12 um manufactured by Toyobo Co., Ltd. was fed by hand as comparative control.
Good Resistance and feeding sound are equivalent to those of E5100-12 um
Poor Resistance and feeding sound are larger than those of E5100-12 um

**[Table 3]**

| | | Example 1 | Example 2 | Example 3 | Example 4 | Comparative Example 1 | Comparative Example 2 | Comparative Example 3 |
|---|---|---|---|---|---|---|---|---|
| Layer configuration Outer side | Release layer | Release layer 1 | Release layer 2 | Release layer 2 | Release layer 3 | - | Release layer 1 | |
| | Substrate layer | - | PET film | - | - | - | - | - |
| | Gas barrier layer | - | Al₂O₃ | - | - | - | - | - |
| | Adhesive layer | - | Urethane-based 3 µm | - | - | - | - | - |
| | Laser-printed layer | Film 1 | Film 2 | Film 3 | Film 4 | - | Film 1 | Film 1 |
| | Adhesive layer | - | - | - | Urethane-based 3 µm | - | - | - |
| Inner side | Pressure-sensitive adhesive layer | Pressure-sensitive adhesive layer 1 | Pressure-sensitive adhesive layer 1 | Pressure-sensitive adhesive layer 2 | Pressure-sensitive adhesive layer 4 | Pressure-sensitive adhesive layer 4 | Pressure-sensitive adhesive layer 1 | - |
| | | | | Pressure-sensitive adhesive layer 3 | | | | |
| | Total thickness [µm] | 82 | 62 | 120 | 73 | 20 | 82 | 70 |
| Laser irradiation condition | Laser source | UV | Fiber | UV | Fiber | UV | Fiber | UV |
| | Pulse frequency [kHz] | 40 | 30 | 40 | 45 | 40 | 30 | 40 |
| | Scanning speed [mm/min.] | 2000 | 1500 | 2000 | 800 | 2000 | 400 | 2000 |
| | Output [%] | 30 | 80 | 30 | 30 | 30 | 80 | 30 |
| Print size | Height [mm] | 5 | 8 | 1 | 7 | No printing | 150 | 5 |
| | Width [mm] | 3 | 5 | 1 | 7 | No printing | 150 | 3 |
| Color L* value | Printed portion | 94.8 | 95.3 | 89.7 | 88.5 | 96.3 | 84.2 | 95.1 |
| | Non-printed portion | 97.1 | 96.4 | 97.5 | 95.3 | 96.3 | 96.4 | 97.3 |
| | Difference | 2.3 | 1.1 | 7.8 | 6.8 | 0 | 12.2 | 2.2 |
| Adhesive strength [N/25mm] | | 1 | 0.7 | 3 | 18 | 9 | 1 | 0 |
| Gas barrier properties | Water vapor transmission rate (g/m²·d) | 6 | 1.3 | 21 | 13 | 67 | 7 | 11 |
| | Oxygen transmission rate (cc/m²·d·atm) | 367 | 1.1 | 56 | 17 | 345 | 353 | 388 |
| Visual evaluation of printed portion (visual perceivability) | | Good | Good | Good | Good | Poor | Good | Good |
| Abrasion resistance of printed portion | | Good | Good | Good | Good | - | Good | Good |
| Feeding property from roll | | Good | Good | Good | Good | Poor | Good | Good |

### [Evaluation Results of Adhesive laminate]

All of the adhesive laminates of Examples 1 to 4 were excellent in the physical properties shown in Table 3. When the adhesive laminate of Example 4 was peeled off after being bonded to the adherend, the pressure-sensitive adhesive layer 3 caused characters written as "aiueo" in black to remain on the adherend, and the adhesive laminate had a security function.

Meanwhile, Comparative Example 1 did not include the laser-printed layer, and therefore the adhesive laminate could not be printed by laser, which was not preferred as the laser-printed adhesive laminate. Since the release layer was not provided, the feeding property of the roll was also poorer than that of Examples.

In Comparative Example 2, the difference between color L* values exceeded 10.0, and the print size was 150 mm, which was not preferred as the label having a display function.

Comparative Example 3 did not include the pressure-sensitive adhesive layer, and therefore Comparative Example 3 was not regarded as the adhesive laminate.

### INDUSTRIAL APPLICABILITY

According to the present invention, it is possible to provide an adhesive laminate suitable for high-mix low-volume production without blurring of printing due to external rubbing or the like.

## Claims

1. An adhesive laminate comprising at least one laser-printed layer capable of being printed by laser irradiation, wherein the laser-printed layer includes a laser-printed portion and a non-printed portion, an absolute value of a difference between the color L* values of the printed portion and the non-printed portion is 1.0 or more and 10.0 or less, and a pressure-sensitive adhesive layer is provided on at least one surface of the adhesive laminate.

2. The adhesive laminate according to claim 1, wherein at least one of bismuth, gadolinium, neodymium, titanium, antimony, tin, and aluminum as a simple substance or an oxide is contained as a metal capable of being printed by laser irradiation.

3. The adhesive laminate according to any one of claim 1 or 2, wherein a thickness of the laser-printed layer is 5 um or more and 200 um or less.

4. The adhesive laminate according to any one of claims 1 to 3, wherein either a height or a width of a print size in the printed portion is 0.2 mm or more and 100 mm or less.

5. The adhesive laminate according to any one of claims 1 to 4, wherein a resin constituting the laser-printed layer is mainly any one of polyester, polypropylene, polyethylene, and polystyrene.

6. The adhesive laminate according to any one of claims 1 to 5, wherein the adhesive laminate has an adhesive strength of 0.2 N/25 mm or more and 20 N/25 mm or less.

7. The adhesive laminate according to any one of claims 1 to 6, wherein the adhesive laminate includes a release layer provided on a surface opposite to the pressure-sensitive adhesive layer.

8. A security label comprising the adhesive laminate according to any one of claims 1 to 7 in at least a part of the security label.

9. The security label according to claim 8, wherein after peeling, completion of the peeling can be discriminated by at least any of (1) to (3): (1) a character is left on an adherend; (2) at least a part of the adhesive laminate is broken; or (3) an adhesive strength is lost.
